(19) Europäisches Patentamt
European Patent Office
Office européen des brevets

(11) **EP 4 489 459 A1**

(12) **EUROPEAN PATENT APPLICATION**
published in accordance with Art. 153(4) EPC

(43) Date of publication:
08.01.2025 Bulletin 2025/02

(51) International Patent Classification (IPC):
**H04W 12/06** (2021.01)

(21) Application number: 23773861.2

(22) Date of filing: 21.03.2023

(52) Cooperative Patent Classification (CPC):
**H04L 9/32; H04W 12/06; H04W 12/122**

(86) International application number:
**PCT/CN2023/082821**

(87) International publication number:
**WO 2023/179614 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 23.03.2022 CN 202210290757

(71) Applicant: **Huawei Technologies Co., Ltd.**
**Shenzhen, Guangdong 518129 (CN)**

(72) Inventors:
• **SHI, Dai**
**Shenzhen, Guangdong 518129 (CN)**
• **XIONG, Xiaochun**
**Shenzhen, Guangdong 518129 (CN)**

(74) Representative: **Maiwald GmbH**
**Engineering**
**Elisenhof**
**Elisenstrasse 3**
**80335 München (DE)**

(54) **SYSTEM MESSAGE TRANSMISSION METHOD AND COMMUNICATION APPARATUS**

(57) This application provides a system message transmission method and a communication apparatus. The method includes: receiving, based on scheduling information of OSI in a first SIB1 when a system frame number is $\lambda 1$ and a slot number is $v1$, OSI and a first digital signature that are sent by an access network device, where the first digital signature is a signature for the OSI and a time stamp $t1$; determining the time stamp $t1$ based on the system frame number $\lambda 1$, the slot number $v1$, a time stamp $t2$, a system frame number $\lambda 2$, and a slot number $v2$, where the system frame number $\lambda 2$ and the slot number $v2$ are a system frame number and a slot number to which the first SIB1 belongs, and the time stamp $t2$ is an absolute time point corresponding to the access network device when the system frame number is $\lambda 2$ and the slot number is $v2$; and verifying the first digital signature based on the OSI and the time stamp $t1$. According to the method, the time stamp $t1$ does not need to be sent during sending of the OSI, to help reduce a quantity of information bits occupied by the time stamp while ensuring precision of the time stamp.

```
┌──────────────────┐                    ┌──────────────────┐
│ Access network   │                    │    Terminal      │
│ device           │                    │    device        │
└──────────────────┘                    └──────────────────┘
┌──────────────────────┐
│ 401: Generate a first│
│ digital signature,   │
│ where the first      │
│ digital signature    │
│ is a signature for   │
│ OSI and a time       │
│ stamp t1             │
└──────────────────────┘
          │ 402: Send a first message to the
          │ terminal device when a system
          │ frame number is λ1 and a slot
          │ number is v1, where the first
          │ message includes the OSI and
          │ the first digital signature, and
          │ the first message does not
          │ include the time stamp t1
          │─────────────────────────────────▶
                              ┌──────────────────────────────┐
                              │ 403: The terminal device      │
                              │ receives, based on scheduling │
                              │ information of the OSI in a   │
                              │ first SIB1 when the system    │
                              │ frame number is λ1 and the    │
                              │ slot number is v1, the first  │
                              │ message sent by the access    │
                              │ network device                │
                              └──────────────────────────────┘
                              ┌──────────────────────────────┐
                              │ 404: The terminal device      │
                              │ determines the time stamp t1  │
                              │ based on the system frame     │
                              │ number λ1, the slot number v1,│
                              │ a time stamp t2, a system     │
                              │ frame number λ2, and a slot   │
                              │ number v2                     │
                              └──────────────────────────────┘
                              ┌──────────────────────────────┐
                              │ 405: The terminal device      │
                              │ verifies the first digital    │
                              │ signature based on the OSI    │
                              │ and the time stamp t1         │
                              └──────────────────────────────┘
```

FIG. 4

**Description**

This application claims priority to Chinese Patent Application No. 202210290757.3, filed with the China National Intellectual Property Administration on March 23, 2022 and entitled "SYSTEM MESSAGE TRANSMISSION METHOD AND COMMUNICATION APPARATUS", which is incorporated herein by reference in its entirety.

**TECHNICAL FIELD**

This application relates to the field of communication technologies, and in particular, to a system message transmission method and a communication apparatus.

**BACKGROUND**

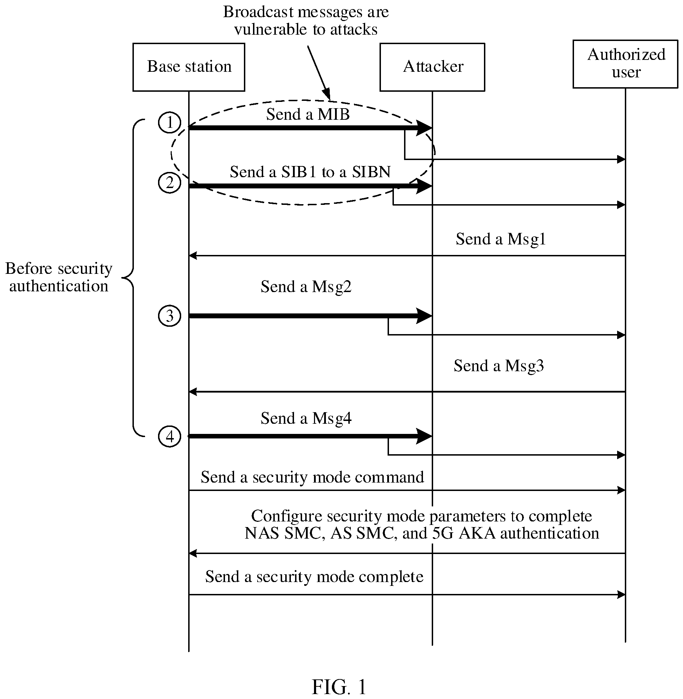

In an existing wireless communication technology, a user of a terminal device needs to obtain some basic information about a base station in an initial network access state. The base station broadcasts a system message to the terminal device in a specified periodicity. Usually, this type of system message is referred to as a master information block (master information block, MIB) and a system information block (system information block, SIB). The terminal device receives a MIB message and a SIB message that are sent by the base station, to obtain the basic information about the base station, so as to complete a procedure of accessing the base station. For example, as shown in FIG. 1, in an initial state, a base station does not know when a terminal device accesses the base station, and before a connection is established between the terminal device and the base station, a security context cannot be established between the terminal device and the base station. Consequently, encrypted protection cannot be performed on a MIB message and a SIB message that are sent by the base station. In this case, the MIB message and the SIB message are easily stolen and spoofed by a false base station. Based on this, the false base station is connected to the terminal device, deceives the terminal device, and steals privacy information.

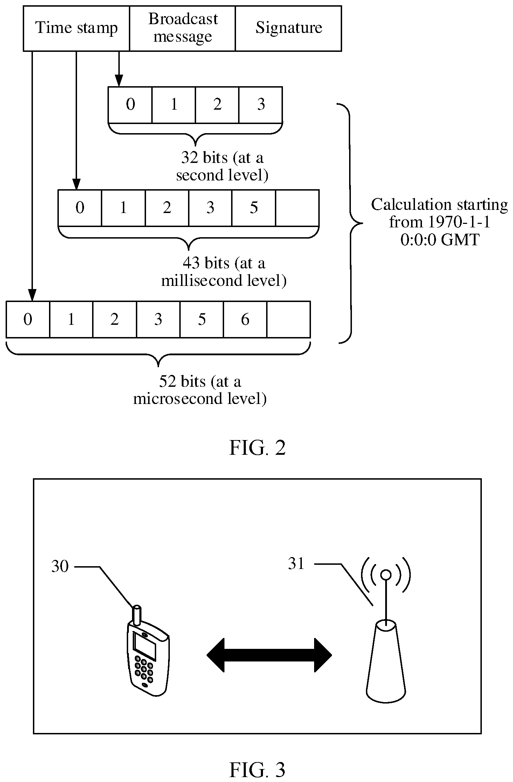

To prevent repeated attacks, the base station signs the system message and a time stamp to obtain a digital signature. The base station delivers, through broadcasting, the system message, the time stamp, and the digital signature to the terminal device together. After receiving the system message, the time stamp, and the digital signature, the terminal device verifies the digital signature by using a public key based on the base station, the system message, and the time stamp, to determine validity of the system message. A length of information bits (bit) occupied by a quantized time stamp varies with precision of the time stamp. Higher precision of the time stamp indicates more information bits that are occupied. For example, as shown in FIG. 2, when precision of a time stamp is at a second level, the time stamp needs to occupy 32 bits when calculation starts from 1970-1-1 0:0:0 GMT (Greenwich mean time). When the precision of the time stamp is at a millisecond level, the time stamp needs to occupy 43 bits when calculation starts from 1970-1-1 0:0:0 GMT. When the precision of the time stamp is at a microsecond level, the time stamp needs to occupy 52 bits when calculation starts from 1970-1-1 0:0:0 GMT. How to reduce a quantity of information bits occupied by the time stamp while ensuring the precision of the time stamp is an urgent problem to be resolved currently.

**SUMMARY**

Embodiments of this application provide a system message transmission method and a communication apparatus, to help reduce a quantity of information bits occupied by a time stamp while ensuring precision of the time stamp.

According to a first aspect, this application provides a system message transmission method. The method may be performed by a terminal device, or may be performed by a component (for example, a processor, a chip, or a chip system) of the terminal device, or may be performed by a logic module or software that can implement all or a part of functions of the terminal device. The method includes:

The terminal device receives, based on scheduling information of OSI (other system information) in a first SIB1 (a system information block 1) when a system frame number is $\lambda 1$ and a slot number is $v1$, a first message sent by an access network device. The first message includes the OSI and a first digital signature. The first digital signature is a signature for the OSI and a time stamp $t1$. The time stamp $t1$ is an absolute time point corresponding to the access network device when the system frame number is $\lambda 1$ and the slot number is $v1$. The terminal device determines the time stamp $t1$ based on the system frame number $\lambda 1$, the slot number $v1$, a time stamp $t2$, a system frame number $\lambda 2$, and a slot number $v2$. The system frame number $\lambda 2$ and the slot number $v2$ are a system frame number and a slot number to which the first SIB1 belongs. The time stamp $t2$ is an absolute time point corresponding to the access network device when the system frame number is $\lambda 2$ and the slot number is $v2$. The terminal device verifies the first digital signature based on the OSI and the time stamp $t1$.

According to the method described in the first aspect, the time stamp $t1$ does not need to be sent during sending of the OSI, to help reduce a quantity of information bits occupied by the time stamp while ensuring precision of the time stamp.

In a possible implementation, before the receiving, by a terminal device based on scheduling information of OSI in a first SIB1 when a system frame number is $\lambda 1$ and a slot number is $v1$, a first message sent by an access network device, the terminal device may further perform the following steps:

The terminal device receives, when the system frame number is $\lambda 2$ and the slot number is $v2$, a second message sent by the access network device. The second message includes the first SIB1, the time stamp $t2$, and a second digital signature, and the second digital signature is a signature for the first SIB1 and the time stamp $t2$. The terminal device determines, based on the first SIB1, the time stamp $t2$, and the second digital signature, that the first SIB1 is valid.

Based on the possible implementation, when the first SIB1 is sent, the time stamp t2 corresponding to the first SIB1 still needs to be sent. Therefore, a protocol is slightly modified, and implementation is facilitated.

In a possible implementation, before the receiving, by a terminal device based on scheduling information of OSI in a first SIB1 when a system frame number is $\lambda 1$ and a slot number is $v1$, a first message sent by an access network device, the terminal device may further perform the following steps:

The terminal device receives, when the system frame number is $\lambda 2$ and the slot number is $v2$, a second message sent by the access network device. The second message includes the first SIB1 and a second digital signature. The second digital signature is a signature for the first SIB1 and the time stamp $t2$. The terminal device obtains a time stamp $t3$. The time stamp $t3$ is an absolute time point corresponding to the access network device when the system frame number is 0 and the slot number is 0. The terminal device determines the time stamp $t2$ based on the time stamp $t3$, the system frame number $\lambda 2$, and the slot number $v2$. The terminal device determines, based on the first SIB1, the time stamp $t2$, and the second digital signature, that the first SIB1 is valid.

Based on the possible implementation, the time stamp $t2$ does not need to be sent during sending of the first SIB1, to help reduce a quantity of information bits occupied by the time stamp while ensuring precision of the time stamp.

In a possible implementation, before the receiving, by the terminal device, a second message sent by the access network device, the terminal device may further perform the following steps:

The terminal device receives, when the system frame number is 0 and the slot number is 0, a third message sent by the access network device. The third message includes a second SIB1, a time stamp $tx$, a difference $\Delta$, and a third digital signature. The third digital signature is a signature for the second SIB1 and the time stamp $t3$. The terminal device determines the time stamp $t3$ based on the time stamp $tx$ and the difference $\Delta$. The time stamp $tx = \left\lfloor \frac{t3}{10M} \right\rfloor$. M is a maximum value of the system frame number, and the time stamp $t3$ is equal to a sum of the time stamp $tx$ and the difference $\Delta$. The terminal device determines, based on the second SIB1, the time stamp $t3$, and the third digital signature, that the second SIB1 is valid. The terminal device stores the difference $\Delta$ into storage space.

The second message further includes the time stamp $tx,$ and a specific implementation of the obtaining, by terminal device, a time stamp $t3$ is as follows:

The terminal device obtains the difference $\Delta$ from the storage space. The terminal device determines the time stamp $t3$ based on the time stamp $tx$ and the difference $\Delta$.

Based on the possible implementation, when the first SIB1 is sent, the time stamp $t3$ is not directly sent, but the time stamp $tx$ and the difference $\Delta$ are sent, so that the terminal device determines the time stamp t3 based on the time stamp $tx$ and the difference $\Delta$ . Information bits occupied by the time stamp $tx$ and the difference $\Delta$ are far fewer than information bits occupied by the time stamp t3. This facilitates reducing a quantity of information bits occupied by the time stamp. In addition, by storing the difference $\Delta$, the terminal device can determine the time stamp $t3$ when receiving the second message that carries the time stamp $tx.$ This facilitates reducing network latency.

In a possible implementation, before the receiving, by the terminal device when the system frame number is $\lambda 2$ and the slot number is $v2$, the second message sent by the access network device, the terminal device may further perform the following steps:

The terminal device receives, when the system frame number is 0 and the slot number is 0, a third message sent by the access network device. The third message includes a second SIB 1, a time stamp $tx,$ a difference $\Delta$, and a third digital signature. The third digital signature is a signature for the second SIB1 and the time stamp $t3$. The terminal device determines the time stamp $t3$ based on the time stamp $tx$ and the difference $\Delta$. The time stamp $tx = \left\lfloor \frac{t3}{10M} \right\rfloor$. M is a maximum value of the system frame number. The time stamp $t3$ is equal to a sum of the time stamp $tx$ and the difference $\Delta$. The terminal device determines, based on the second SIB1, the time stamp $t3$, and the third digital signature, that the second SIB1 is valid. The terminal device stores the time stamp $tx$ and the difference $\Delta$ into storage space.

A specific implementation of the obtaining, by the terminal device, a time stamp $t3$ is as follows: The terminal device obtains the time stamp $tx$ and the difference $\Delta$ from the storage space. The terminal device determines the time stamp $t3$ based on the time stamp $tx$ and the difference $\Delta$.

Based on the possible implementation, when the first SIB1 is sent, the time stamp $t3$ is not directly sent, but the time stamp *tx* and the difference Δ are sent, so that the terminal device determines the time stamp *t*3 based on the time stamp *tx* and the difference Δ . Information bits occupied by the time stamp *tx* and the difference Δ are far fewer than information bits occupied by the time stamp *t*3. This facilitates reducing a quantity of information bits occupied by the time stamp. In addition, by storing the time stamp *tx* and the difference Δ, the terminal device can determine the time stamp *t*3 after receiving the first SIB 1 even if the time stamp *tx* and the difference Δ are not subsequently received. This facilitates reducing network latency.

In a possible implementation, a delivery periodicity of the time stamp *tx* and/or a delivery periodicity of the difference Δ are/is configured by the network device or pre-specified in a protocol. If the network device configures the delivery periodicity of the time stamp *tx* and/or the delivery periodicity of the difference Δ, the delivery periodicity of the time stamp *tx* and/or the delivery periodicity of the difference Δ can be more flexible. If the delivery periodicity of the time stamp *tx* and/or the delivery periodicity of the difference Δ are/is pre-specified in the protocol, network overheads can be reduced.

In a possible implementation, the time stamp *t*1 satisfies the following formula:

$$t1 = t2 + (\lambda1 - \lambda2) * 10 + (v1 - v2) * \alpha$$

A unit of the time stamp *t*1 is millisecond, $\alpha$ is a time length of one slot, and a unit of $\alpha$ is millisecond.

Based on the possible implementation, the time stamp *t*1 can be accurately determined.

In a possible implementation, the time stamp *t*2 satisfies the following formula:

$$t2 = t3 + \lambda2 * 10 + v2 * \alpha$$

A unit of the time stamp t2 is millisecond, $\alpha$ is a time length of one slot, and a unit of $\alpha$ is millisecond.

Based on the possible implementation, the time stamp *t*2 can be accurately determined.

According to a second aspect, this application provides a system message transmission method. The method may be performed by an access network device, or may be performed by a component (for example, a processor, a chip, or a chip system) of the access network device, or may be performed by a logic module or software that can implement all or a part of functions of the access network device. The method includes:

The access network device generates a first digital signature. The first digital signature is a signature for OSI (other system information) and a time stamp *t*1. The time stamp *t*1 is an absolute time point corresponding to the access network device when a system frame number is $\lambda$1 and a slot number is *v*1. The access network device sends a first message to a terminal device when the system frame number is $\lambda$1 and the slot number is *v*1. The first message includes the OSI and the first digital signature. The first message does not include the time stamp *t*1.

In a possible implementation, before the generating, by an access network device, a first digital signature, the access network device may further send a second message to the terminal device when the system frame number is $\lambda$2 and the slot number is *v*2. The second message includes a first SIB 1 (system information block 1), a time stamp *t*2, and a second digital signature. The second digital signature is a signature for the first SIB 1 and the time stamp *t*2. The time stamp *t*2 is an absolute time point corresponding to the access network device when the system frame number is $\lambda$2 and the slot number is *v*2. The first SIB1 includes scheduling information of the OSI.

In a possible implementation, before the generating, by an access network device, a first digital signature, the access network device may further send a second message to the terminal device when the system frame number is $\lambda$2 and the slot number is *v*2. The second message includes a first SIB1 (system information block 1) and a second digital signature. The second digital signature is a signature for the first SIB1 and the time stamp *t*2. The time stamp *t*2 is an absolute time point corresponding to the access network device when the system frame number is $\lambda$2 and the slot number is *v*2. The second message does not include the time stamp *t*2. The first SIB1 includes scheduling information of the OSI.

In a possible implementation, the access network device may further send a third message to the terminal device when the system frame number is 0 and the slot number is 0. The third message includes a second SIB 1, a time stamp *tx,* a difference Δ, and a third digital signature. The third digital signature is a signature for the second SIB1 and the time stamp *t*3. The time stamp *t*3 is an absolute time point corresponding to the access network device when the system frame number is 0 and the slot number is 0. The time stamp $tx = \left\lfloor \frac{t3}{10M} \right\rfloor$. M is a maximum value of the system frame number. The time stamp *t*3 is equal to a sum of the time stamp *tx* and the difference Δ.

In a possible implementation, the second message further includes the time stamp *tx.*

In a possible implementation, a delivery periodicity of the time stamp *tx* and/or a delivery periodicity of the difference Δ are/is configured by a network device or pre-specified in a protocol.

For beneficial effects of the second aspect, refer to beneficial effects of the first aspect. Details are not described herein.

According to a third aspect, this application provides a communication apparatus. The communication apparatus may be a terminal device, or may be an apparatus in a terminal device, or may be an apparatus that is compatible with a terminal device. The communication apparatus may alternatively be a chip system. The communication apparatus may perform the method in the first aspect. A function of the communication apparatus may be implemented by hardware, or may be implemented by hardware executing corresponding software. The hardware or the software includes one or more units or modules corresponding to the foregoing functions. The unit or module may be software and/or hardware. For an operation performed by the communication apparatus and beneficial effects, refer to the method and beneficial effects in the first aspect.

According to a fourth aspect, this application provides a communication apparatus. The communication apparatus may be an access network device, or may be an apparatus in an access network device, or may be an apparatus that is compatible with an access network device. The communication apparatus may alternatively be a chip system. The communication apparatus may perform the method in the second aspect. A function of the communication apparatus may be implemented by hardware, or may be implemented by hardware executing corresponding software. The hardware or the software includes one or more units or modules corresponding to the foregoing functions. The unit or module may be software and/or hardware. For an operation performed by the communication apparatus and beneficial effects, refer to the method and beneficial effects in the second aspect.

According to a fifth aspect, this application provides a communication apparatus. The communication apparatus includes a processor. When the processor invokes a computer program in a memory, the method in the first aspect or the second aspect is enabled to be performed.

According to a sixth aspect, this application provides a communication apparatus. The communication apparatus includes a processor and a memory. The processor is coupled to the memory. The processor is configured to implement the method according to the first aspect or the second aspect.

According to a seventh aspect, this application provides a communication apparatus. The communication apparatus includes a processor, a memory, and a transceiver. The processor is coupled to the memory. The transceiver is configured to receive and send data. The processor is configured to implement the method according to the first aspect or the second aspect.

According to an eighth aspect, this application provides a communication apparatus. The communication apparatus includes a processor and an interface. The interface is configured to receive or output a signal. The processor is configured to implement the method in the first aspect or the second aspect by using a logic circuit or executing code instructions.

According to a ninth aspect, this application provides a computer-readable storage medium. The storage medium stores a computer program or instructions. When the computer program is or the instructions are executed by a communication apparatus, the method in the first aspect or the second aspect is implemented.

According to a tenth aspect, this application provides a computer program product including instructions. When a computer reads and executes the computer program product, the computer is enabled to perform the method in the first aspect or the second aspect.

## BRIEF DESCRIPTION OF DRAWINGS

FIG. 1 is a schematic flowchart of existing system message transmission;
FIG. 2 is a diagram of existing time stamp transmission;
FIG. 3 is a diagram of a communication system according to this application;
FIG. 4 is a schematic flowchart of a system message transmission method according to this application;
FIG. 5 is a diagram of system message transmission according to this application;
FIG. 6 is a schematic flowchart of a system message transmission method according to this application;
FIG. 7 is a diagram of system message transmission according to this application;
FIG. 8 is a schematic flowchart of a system message transmission method according to this application;
FIG. 9 is a diagram of system message transmission according to this application;
FIG. 10 is a schematic flowchart of a system message transmission method according to this application;
FIG. 11 is a diagram of system message transmission according to this application;
FIG. 12 is a diagram of system message transmission according to this application;
FIG. 13A and FIG. 13B are a schematic flowchart of a system message transmission method according to this application;
FIG. 14 is a diagram of system message transmission according to this application;
FIG. 15 is a diagram of a transmission periodicity according to this application;
FIG. 16 is a diagram of a structure of a communication apparatus according to this application;
FIG. 17 is a diagram of a structure of a communication apparatus according to this application; and

FIG. 18 is a diagram of a structure of a chip according to this application.

## DESCRIPTION OF EMBODIMENTS

The following further describes specific embodiments of this application in detail with reference to the accompanying drawings.

In the specification, claims, and accompanying drawings of this application, the terms "first", "second", and the like are intended to distinguish between different objects but do not necessarily indicate a specific order. In addition, the terms "include", "contain", and any variations thereof are intended to cover a non-exclusive inclusion. For example, a process, method, system, product, or device that includes a list of steps or units is not limited to the listed steps or units, but optionally further includes other steps or units not listed, or optionally further includes other steps or units inherent to the process, method, product, or device.

It may be understood that an "embodiment" mentioned in this specification means that particular features, structures, or characteristics described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: Only A exists, only B exists, and both A and B exist. A and B may be singular or plural. The character "/" generally indicates an "or" relationship between the associated objects. "At least one of the following items (pieces)" or a similar expression thereof refers to any combination of these items, including any combination of a singular item (piece) or plural items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, and the like.

FIG. 3 is a diagram of a communication system according to an embodiment of this application. As shown in FIG. 3, the communication system includes a terminal device 30 and an access network device 31. A quantity of terminal devices is merely an example, and the quantity of terminal devices is not specifically limited in embodiments of this application.

The following separately describes in detail the terminal device and the access network device in FIG. 3.

1. Terminal device

The terminal device includes a device that provides voice and/or data connectivity for a user. For example, the terminal device is a device that has a wireless transceiver function, and may be deployed on land, including indoor or outdoor, handheld, wearable, or in-vehicle; or may be deployed on a water surface (for example, on a ship); or may be deployed in the air (for example, on an airplane, a balloon, or a satellite). The terminal device may be a mobile phone (mobile phone), a tablet computer (Pad), a computer with a wireless transceiver function, a virtual reality (VR) terminal device, an augmented reality (AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE proxy, a UE apparatus, or the like. The terminal device may be fixed or mobile.

2. Access network device

The access network device is an entity configured to transmit or receive a signal on a network side. The access network device includes, for example, but is not limited to, a next generation NodeB (generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a base station controller (base station controller, BSC), a base transceiver station (base transceiver station, BTS), a home base station (home evolved NodeB (HeNB) or home NodeB (HNB)), a baseband unit (baseband unit, BBU), a transmission reception point (transmission reception point, TRP), a transmission point (transmission point, TP), a mobile switching center, and an entity that transmits a signal to a tag terminal device, for example, a reader (reader).
To better understand embodiments of this application, the following describes some technical terms in this application.

1. System information (system information)

System information of new radio (new radio, NR) mainly includes a master information block (master information block, MIB) and system information blocks (system information blocks, SIBs). SIBs other than the MIB and a SIB1 are referred to as other system information (other system information, OSI). In 38.331, the SIBs are classified into nine types: SystemInformationBlockType1 to SystemInformationBlockType9, which are briefly referred to as: SIB1, SIB2 ... SIBX.
A definition of a broadcast message in NR is shown in the following Table 1.

**Table 1**

| Type | NR |
|------|-----|
| MIB | Critical information for a user to access a network |
| SIB1 | Cell access information<br>Scheduling information of OSI<br>Access restriction parameter |
| SIB2 | Cell reselection common parameter |
| SIB3 | Intra-frequency neighboring cell reselection information |
| SIB4 | Inter-frequency neighboring cell reselection information |
| SIB5 | Inter-system cell reselection information |
| SIB6 | ETWS primary notification information |
| SIB7 | ETWS primary notification information |
| SIB8 | CMAS warning notification information |
| SIB9 | GPS & UTC information |

2. MIB message

In a 5G communication system, a MIB message is periodically broadcast, and the MIB message is carried in a synchronization signal block (SS Block, SSB). The SSB includes three parts: a PSS (primary synchronization signal), an SSS (secondary synchronization signal), and a PBCH (physical broadcast channel). The MIB message is carried in the PBCH. A payload (payload) of the PBCH is in a format of MIB + 1bit + 8bit. Because the MIB message is carried on the SSB, a sending periodicity of the MIB message is a sending periodicity of the SSB. A transmission periodicity of the SSB is related to factors such as a subcarrier spacing and a quantity of beams.
Meanings of fields in the MIB message are shown in the following Table 2.

**Table 2**

| IE name | Meaning |
|---------|---------|
| systemFrameNumber | System frame number, 6 bits (bit) |
| subCarrierSpacingCommon | Common subcarrier spacing, 1 bit |
| ssb-SubcarrierOffset | SSB subcarrier offset, 4 bits |

(continued)

| IE name | Meaning |
|---|---|
| dmrs-TypeA-Position | dmrs-TypeA position, 1 bit |
| pdcch-ConfigSIB1 | PDCCH-configuration SIB1, 8 bits |
| cellBarred | Cell access barred, 1 bit |
| intraFreqReselection | Intra-frequency reselection indicator, 1 bit |
| spare | Spare, 1 bit |

When a terminal device correctly receives and parses the SSB, a processing procedure is as follows:

1. Perform frame synchronization with an access network device by detecting the PSS and the SSS.
2. Decode the PBCH correctly and obtain the MIB message through parsing from the PBCH.
3. Obtain first 6 bits of the systemFrameNumber from the MIB message.
4. Obtain last 4 bits of the systemFrameNumber from the payload of the PBCH.
5. Obtain 10-bit system frame numbers from 0 to 1023 through combination.
6. Calculation of a DMRS of the PBCH implies a number of a half frame in which the PBCH is located and an indication number of the SSB. The terminal device may obtain, by performing blind detection on the DMRS of the PBCH, a specific position at which the received SSB is located in a radio frame, to obtain a number of a slot in which the access network device sends the SSB, to perform slot-level frame synchronization with the current access network device.

3. SIB1 message

Meanings of fields in a SIB1 message are shown in the following Table 3.

| Table 3 | |
|---|---|
| IE name | Meaning |
| cellSelectionInfo | Cell selection parameter |
| cellAccessRelatedInfo | Cell access and camping parameter |
| connEstFailureControl | RRC connection establishment failure parameter |
| si-SchedulingInfo | OSI scheduling parameter |
| servingCellConfigCommon | Common channel configuration parameter |
| ims-EmergencySupport | Whether emergency calls are supported |
| eCallOverIMS-Support | Whether eCall is supported |
| ue-TimersAndConstants | Timer parameter |
| uac-BarringInfo | Access control parameter |
| useFullResumeID | Indicates whether an I-RNTI carries a short or full ID in a resume procedure |

4. Scheduling information of OSI

Each SI message contains one or more pieces of OSI with a same scheduling requirement (the pieces of OSI have a same transmission periodicity). si-SchedulingInfo in a SIB 1 message is scheduling information of OSI. The si-SchedulingInfo includes an SI message list, an SI window length, and an SI broadcast periodicity. The terminal device may determine a position of a receive time domain window of the OSI based on the SI message list, the SI window length, and the SI broadcast periodicity that are in the si-SchedulingInfo, to receive the OSI.

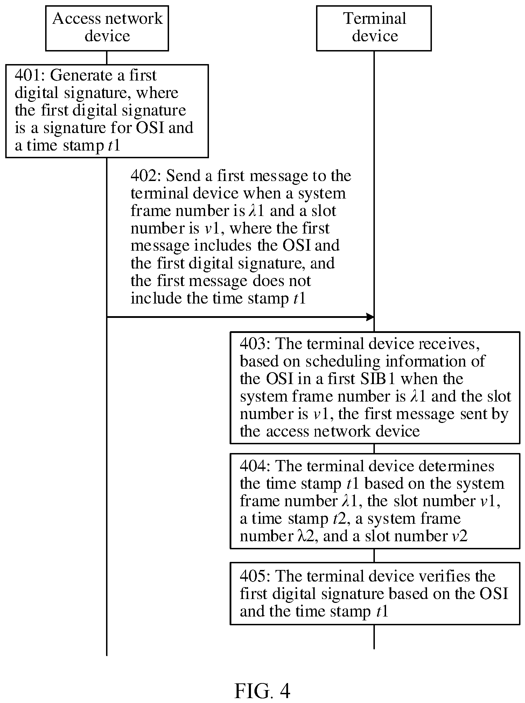

FIG. 4 is a schematic flowchart of a system message transmission method according to an embodiment of this application. FIG. 4 shows an example in which a terminal device and an access network device are used as execution bodies of the method. An execution body of the method is not limited in this application. For example, the terminal device or the access network device in FIG. 4 may alternatively be a chip, a chip system, or a processor that supports the terminal device or the access network device in implementing the method, or may be a logic module or software that can implement all or some functions of the terminal device or the access network device.

401: The access network device generates a first digital signature, where the first digital signature is a signature for OSI and a time stamp $t1$.

The time stamp $t1$ is an absolute time point corresponding to the access network device when a system frame number is $\lambda 1$ and a slot number is $v1$. A unit of the time stamp $t1$ may be millisecond, or a unit of the time stamp $t1$ may be second, microsecond, or the like. This is not limited in embodiments of this application.

Optionally, the system frame number may alternatively be referred to as a system radio frame number, occupies 10 bits, and ranges from 0 to 1023. Duration of a radio frame is about 10 ms. A value of the system frame number $\lambda 1$ may be any one of 0 to 1023.

A plurality of radio frame formats are defined in 5G. Each slot has 14 symbols. In different frame formats, radio frames include different quantities of slots, and lengths of the slots are different. For example, slot configuration in a case of a normal cyclic prefix (cyclic prefix, CP) may be shown in Table 4 below, and slot configuration in a case of an extended CP may be shown in Table 5 below.

As shown in the following Table 4 and Table 5, when a subcarrier spacing (subcarrier spacing, SCS) is 15 kHz, one radio frame includes 10 slots, the slot number ranges from 0 to 9, and a value of the slot number $v1$ may be any one of 0 to 9.

When the SCS is 30 kHz, one radio frame includes 20 slots, the slot number ranges from 0 to 19, and a value of the slot number $v1$ may be any one of 0 to 19.

When the SCS is 60 kHz, one radio frame includes 40 slots, the slot number ranges from 0 to 39, and a value of the slot number $v1$ may be any one of 0 to 39.

When the SCS is 120 kHz, one radio frame includes 80 slots, the slot number ranges from 0 to 79, and a value of the slot number $v1$ may be any one of 0 to 79.

When the SCS is 240 kHz, one radio frame includes 160 slots, the slot number ranges from 0 to 159, and a value of the slot number $v1$ may be any one of 0 to 159.

**Table 4: Slot configuration in a case of a normal CP**

| $\mu$ | SCS (kHz) | Number $N^{slot}_{symb}$ of symbols per slot | Number $N^{subframe,u}_{slot}$ of slots per subframe | Number $N^{frame,u}_{slot}$ of slots per frame |
|---|---|---|---|---|
| 0 | 15 | 14 | 1 | 10 |
| 1 | 30 | 14 | 2 | 20 |
| 2 | 60 | 14 | 4 | 40 |
| 3 | 120 | 14 | 8 | 80 |
| 4 | 240 | 14 | 16 | 160 |

**Table 5: Slot configuration in a case of an extended CP**

| $\mu$ | SCS (kHz) | Number $N^{slot}_{symb}$ of symbols per slot | Number $N^{subframe,u}_{slot}$ of slots per subframe | Number $N^{frame,u}_{slot}$ of slots per frame |
|---|---|---|---|---|
| 2 | 60 | 12 | 4 | 40 |

A digital signature (also referred to as a public key digital signature) is a digital string that can be generated only by an information sender and cannot be forged by others. The digital string is also a valid proof of authenticity of information sent by the information sender. The digital signature is like a common physical signature written on paper, is implemented by using a technology in the field of public key encryption and is a method used to identify digital information. A set of digital signatures usually defines two complementary operations. One is for signature and the other is for verification. The digital signature is application of an asymmetric key encryption technology and a digital digest technology.

The access network device may process the OSI and the time stamp $t1$ by using a hash function, to obtain a digest, and then encrypt the digest by using a private key of the access network device. An encrypted digest is the first digital signature. The access network device sends the OSI and the first digital signature to the terminal device. After the terminal device obtains the OSI, the time stamp $t1$, and the first digital signature, the terminal device processes the OSI and the time stamp $t1$ by using a hash function same as the hash function of the access network device, to obtain a digest. The terminal device decrypts the first digital signature by using a public key of the access network device, to obtain the digest generated by the access network device. If the digest generated by the terminal device is the same as the digest generated by the access network device, the terminal device confirms that verification on the first digital signature succeeds. That verification on the first digital signature succeeds indicates that the OSI is not tampered with.

In an existing solution, the access network device needs to send the OSI, the time stamp $t1$, and the first digital signature together to the terminal device, so that the terminal device can process the OSI and the time stamp $t1$ by using the hash function same as the hash function of the access network device, to obtain the digest. To reduce information bits occupied by the time stamp, in embodiments of this application, after generating the first digital signature, the access network device only needs to send the OSI and the first digital signature to the terminal device, and does not need to send the time stamp $t1$ to the terminal device. The terminal device may calculate the time stamp $t1$, so that the information bits occupied by the time stamp can be reduced.

402: The access network device sends a first message to the terminal device when the system frame number is $\lambda1$ and the slot number is $v1$, where the first message includes the OSI and the first digital signature, and the first message does not include the time stamp $t1$.

403: The terminal device receives, based on scheduling information of the OSI in the first SIB1 when the system frame number is $\lambda1$ and the slot number is $v1$, the first message sent by the access network device.

In embodiments of this application, before receiving the first message, the terminal device may further receive the first SIB1 when the system frame number is $\lambda2$ and the slot number is $v2$. After receiving the first SIB1, if the terminal device determines that the first SIB 1 is valid, the terminal device receives, based on the scheduling information of the OSI in the first SIB1 and when the system frame number is $\lambda1$ and the slot number is $v1$, the first message sent by the access network device. The scheduling information of the OSI may be si-SchedulingInfo in a SIB1 message. The terminal device may deduce, based on information such as a scheduling periodicity and a length of a scheduling time window of the OSI in the si-SchedulingInfo, a position of a receive time window for receiving the OSI.

404: The terminal device determines the time stamp $t1$ based on the system frame number $\lambda1$, the slot number $v1$, the time stamp t2, the system frame number $\lambda2$, and the slot number $v2$.

The system frame number $\lambda2$ and the slot number $v2$ are a system frame number and a slot number to which the first SIB1 belongs. The time stamp $t2$ is an absolute time point corresponding to the access network device when the system frame number is $\lambda2$ and the slot number is $v2$.

In embodiments of this application, the system frame number $\lambda2$ may be any one in a system frame number range, and the slot number $v2$ may be any one in a slot number range. For descriptions of the system frame number range and the slot number range, refer to the foregoing descriptions. Details are not described herein. A unit of the time stamp $t2$ may be millisecond, or a unit of the time stamp $t2$ may be second, microsecond, or the like. This is not limited in embodiments of this application.

In a possible implementation, when the system frame number $\lambda1$ and the system frame number $\lambda2$ are in a same system frame number periodicity, the time stamp $t1$ satisfies the following formula:

$$t1 = t2 + (\lambda1 - \lambda2) * 10 + (v1 - v2) * \alpha \quad (1)$$

Units of the time stamp $t1$ and the time stamp $t2$ are millisecond. $\alpha$ is a time length of one slot. A unit of $\alpha$ is millisecond. When the time stamp $t1$ and the time stamp $t2$ are in another unit, adaptive deformation may be performed on the formula (1).

In another possible implementation, when the system frame number $\lambda1$ and the system frame number $\lambda2$ are not in a same system frame number periodicity, the formula (1) may be modulated based on the scheduling information of the OSI in the first SIB1, to calculate the time stamp $t1$. For example, a maximum broadcast periodicity of SI is 512 system frames, and the system frame number ranges from 0 to 1023. If the system frame number $\lambda1$ and the system frame number $\lambda2$ are not in the same system frame number periodicity, a difference between the system frame number $\lambda1$ and the system frame number $\lambda2$ is only one frame number periodicity, and the time stamp $t1$ may satisfy the following formula:

$$t1 = t2 + (\lambda1 * 10 + v1 * \alpha + 10240) - (\lambda2 * 10 + v2 * \alpha) \quad (2)$$

Units of the time stamp $t1$ and the time stamp $t2$ are millisecond. $\alpha$ is a time length of one slot. A unit of $\alpha$ is millisecond. When the time stamp $t1$ and the time stamp $t2$ are in another unit, adaptive deformation may be performed on the formula (2).

405: The terminal device verifies the first digital signature based on the OSI and the time stamp $t1$.

In embodiments of this application, the terminal device processes the OSI and the time stamp $t1$ by using the hash function same as the hash function of the access network device, to obtain the digest. The terminal device decrypts the first digital signature by using the public key of the access network device, to obtain the digest generated by the access network device. If the digest generated by the terminal device is the same as the digest generated by the access network device, the terminal device confirms that verification on the first digital signature succeeds. If the digest generated by the terminal device is different from the digest generated by the access network device, the terminal device confirms that verification on the first digital signature fails.

Optionally, after verification on the first digital signature succeeds, the terminal device may further determine whether a difference between the time stamp $t1$ and a local time point is less than a threshold, to determine whether an attack is a repeated attack. If the difference between the time stamp $t1$ and the local time point is less than the threshold, the terminal device determines that a received OSI message is valid.

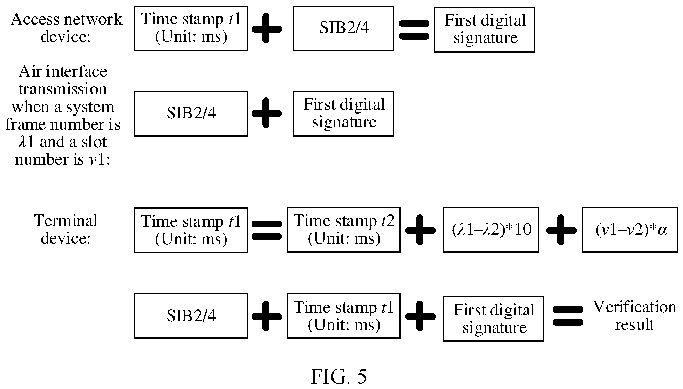

For example, the OSI message is SIB2/4. As shown in FIG. 5, the access network device first generates the first digital signature based on the SIB2/4 and the time stamp $t1$, and then sends the SIB2/4 and the first digital signature to the terminal device when the system frame number is $\lambda1$ and the slot number is $v1$. After receiving the SIB2/4 and the first digital signature based on the scheduling information in the first SIB1, the terminal device determines the time stamp $t1$ based on the system frame number $\lambda1$, the slot number $v1$, the time stamp $t2$, the system frame number $\lambda2$, and the slot number $v2$. The terminal device then verifies the first digital signature based on the OSI and the time stamp $t1$. FIG. 5 shows an example in which the system frame number $\lambda1$ and the system frame number $\lambda2$ are in the same system frame number periodicity.

It can be learned that according to the method described in FIG. 4, after generating the first digital signature, the access network device only needs to send the OSI and the first digital signature to the terminal device, and does not need to send the time stamp $t1$ to the terminal device. The terminal device may calculate the time stamp $t1$, so that the information bits occupied by the time stamp can be reduced.

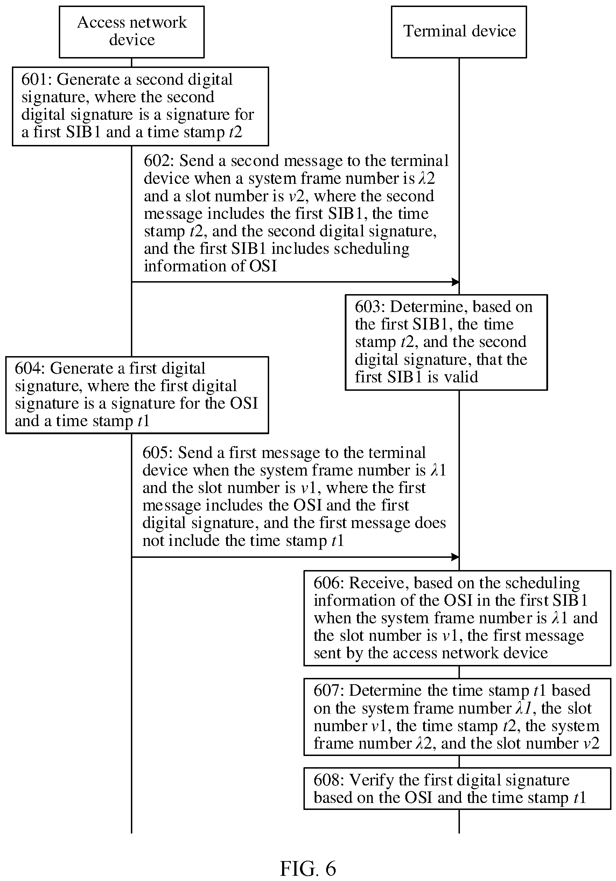

FIG. 6 is a schematic flowchart of a system message transmission method according to an embodiment of this application. FIG. 6 shows an example in which a terminal device and an access network device are used as execution bodies of the method. An execution body of the method is not limited in this application. For example, the terminal device or the access network device in FIG. 6 may alternatively be a chip, a chip system, or a processor that supports the terminal device or the access network device in implementing the method, or may be a logic module or software that can implement all or some functions of the terminal device or the access network device.

601: The access network device generates a second digital signature, where the second digital signature is a signature for a first SIB1 and a time stamp $t2$.

The time stamp $t2$ is an absolute time point corresponding to the access network device when a system frame number is $\lambda2$ and a slot number is $v2$.

A principle in which the access network device generates the second digital signature based on the first SIB1 and the time stamp $t2$ is the same as a principle in which the access network device generates a first digital signature based on OSI and a time stamp $t1$. Details are not described herein.

602: The access network device sends a second message to the terminal device when the system frame number is $\lambda2$ and the slot number is $v2$, where the second message includes the first SIB1, the time stamp $t2$, and the second digital signature, and the first SIB1 includes scheduling information of OSI. Correspondingly, when the system frame number is $\lambda2$ and the slot number is $v2$, the terminal device may receive the second message sent by the access network device.

In other words, in this embodiment, the access network device sends the first SIB1, the time stamp $t2$, and the second digital signature together to the terminal device.

603: The terminal device determines, based on the first SIB1, the time stamp $t2$, and the second digital signature, that the first SIB1 is valid.

In embodiments of this application, the terminal device may first verify the second digital signature based on the first SIB 1 and the time stamp $t2$. If verification on the second digital signature succeeds, the terminal device may also determine whether a difference between the time stamp $t2$ and a local time point is less than a threshold to determine whether an attack is a repeated attack. If the difference between the time stamp $t2$ and the local time point is less than the threshold, the terminal device determines that the first SIB1 is valid.

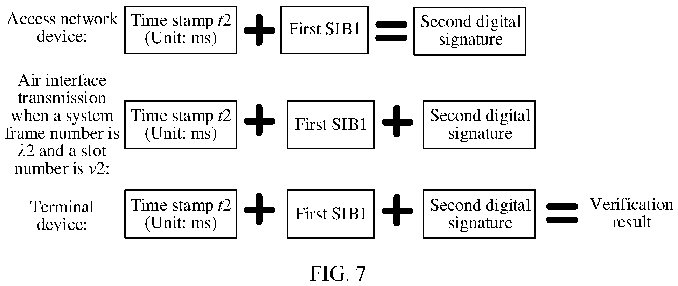

For example, as shown in FIG. 7, the access network device first generates the second digital signature based on the first SIB1 and the time stamp $t2$, and then sends the first SIB1, the time stamp $t2$, and the second digital signature to the terminal device when the system frame number is $\lambda2$ and the slot number is $v2$. After receiving the first SIB1, the time stamp $t2$, and the second digital signature, the terminal device verifies the second digital signature based on the first SIB1 and the time stamp $t2$. If verification on the second digital signature succeeds, the terminal device may also determine whether the difference between the time stamp $t2$ and the local time point is less than the threshold to determine whether the attack is the repeated attack. If the difference between the time stamp $t2$ and the local time point is less than the threshold, the terminal device determines that the first SIB1 is valid.

604: The access network device generates the first digital signature, where the first digital signature is a signature for the OSI and the time stamp $t1$.

The time stamp $t1$ is an absolute time point corresponding to the access network device when the system frame number is $\lambda1$ and the slot number is $v1$.

For specific implementations of step 604 to step 608, refer to the descriptions in the embodiment corresponding to FIG. 4. Details are not described herein.

605: The access network device sends a first message to the terminal device when the system frame number is $\lambda$1 and the slot number is $v$1, where the first message includes the OSI and the first digital signature, and the first message does not include the time stamp $t$1.

606: The terminal device receives, based on the scheduling information of the OSI in the first SIB1 when the system frame number is $\lambda$1 and the slot number is $v$1, the first message sent by the access network device.

607: The terminal device determines the time stamp $t$1 based on the system frame number $\lambda$1, the slot number $v$1, the time stamp $t$2, the system frame number $\lambda$2, and the slot number $v$2.

608: The terminal device verifies the first digital signature based on the OSI and the time stamp $t$1.

According to the method described in FIG. 6, when the first SIB1 is sent, the time stamp $t$2 corresponding to the first SIB1 still needs to be sent. Therefore, a protocol is slightly modified, and implementation is facilitated.

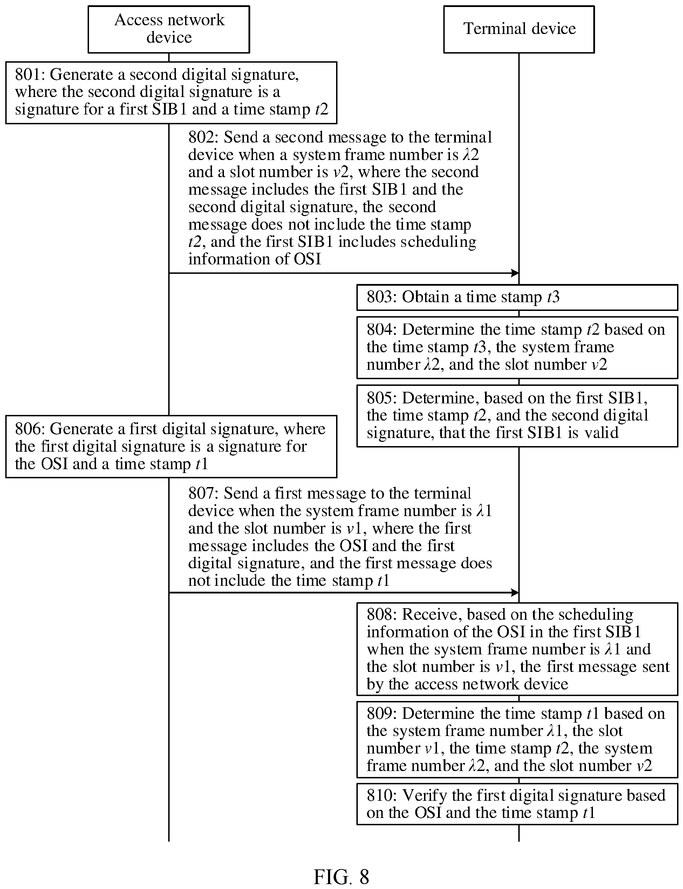

FIG. 8 is a schematic flowchart of a system message transmission method according to an embodiment of this application. FIG. 8 shows an example in which a terminal device and an access network device are used as execution bodies of the method. An execution body of the method is not limited in this application. For example, the terminal device or the access network device in FIG. 8 may alternatively be a chip, a chip system, or a processor that supports the terminal device or the access network device in implementing the method, or may be a logic module or software that can implement all or some functions of the terminal device or the access network device.

801: The access network device generates a second digital signature, where the second digital signature is a signature for a first SIB1 and a time stamp $t$2.

The time stamp $t$2 is an absolute time point corresponding to the access network device when a system frame number is $\lambda$2 and a slot number is $v$2.

802: The access network device sends a second message to the terminal device when the system frame number is $\lambda$2 and the slot number is $v$2, where the second message includes the first SIB 1 and the second digital signature, the second message does not include the time stamp $t$2, and the first SIB1 includes scheduling information of OSI. Correspondingly, when the system frame number is $\lambda$2 and the slot number is $v$2, the terminal device may receive the second message sent by the access network device.

In other words, in this embodiment, the access network device does not send the first SIB1, the time stamp $t$2, and the second digital signature together to the terminal device. The access network device sends only the first SIB1 and the second digital signature together to the terminal device. The terminal device calculates the time stamp $t$2.

803: The terminal device obtains a time stamp $t$3.

In embodiments of this application, after receiving the second message, the terminal device obtains the time stamp $t$3. The time stamp $t$3 is an absolute time point corresponding to the access network device when the system frame number is 0 and the slot number is 0. A unit of the time stamp $t$3 may be millisecond, or a unit of the time stamp $t$3 may be second, microsecond, or the like. This is not limited in embodiments of this application.

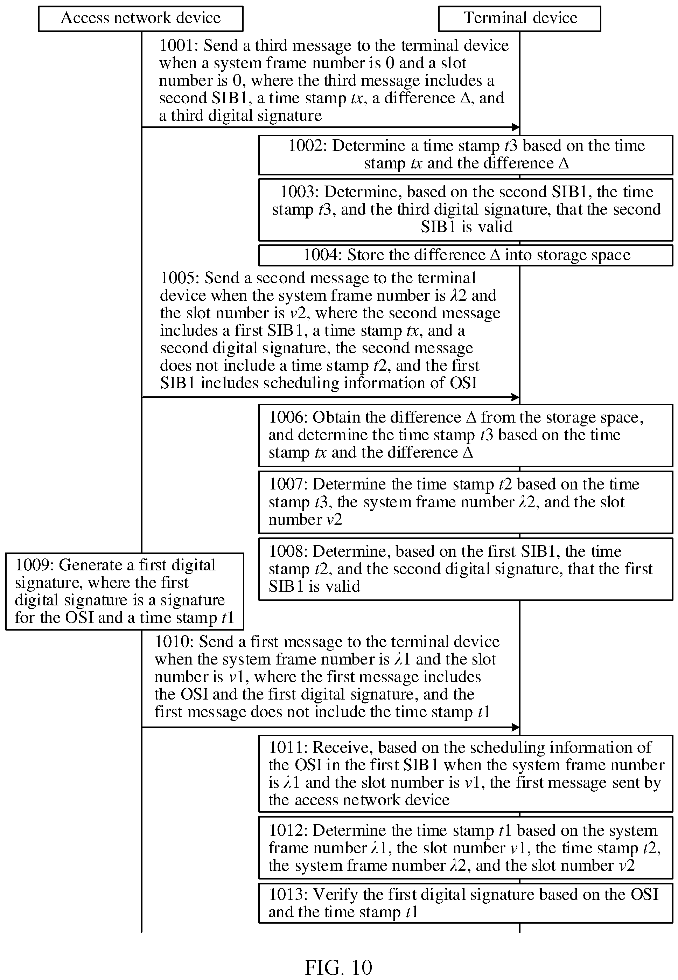

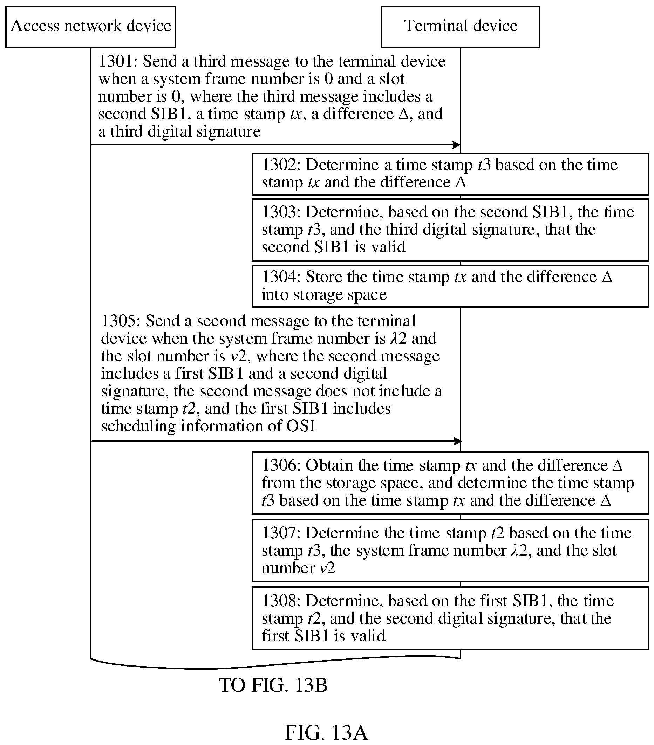

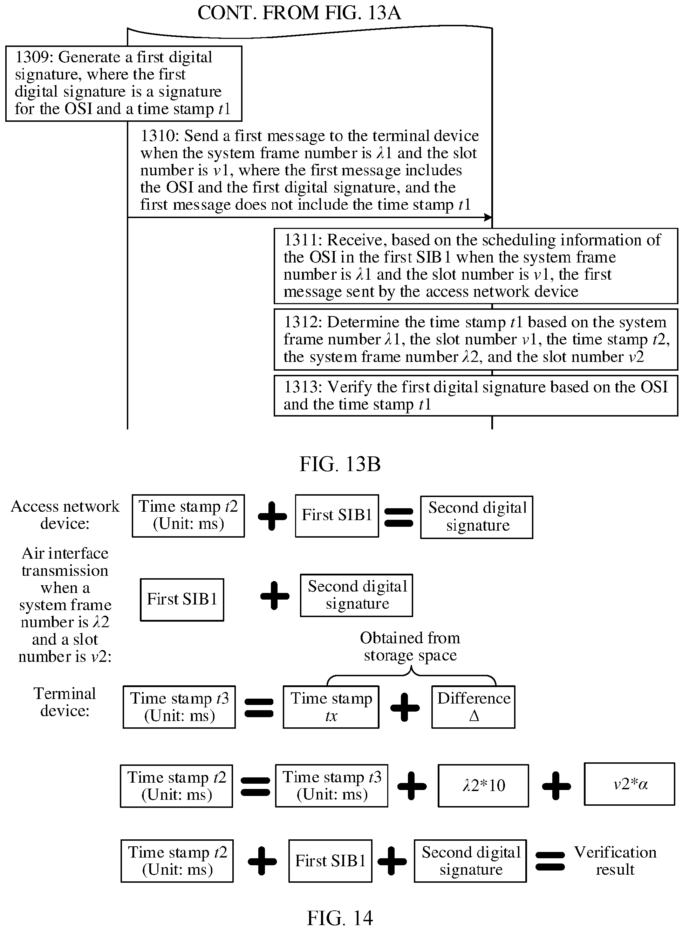

For a specific manner of obtaining the time stamp $t$3 by the terminal device, refer to descriptions in the following embodiments corresponding to FIG. 10 and FIG. 13A and FIG. 13B. Details are not described herein.

804: The terminal device determines the time stamp $t$2 based on the time stamp $t$3, the system frame number $\lambda$2, and the slot number $v$2.

In a possible implementation, the time stamp $t$2 satisfies the following formula:

$$t2 = t3 + \lambda 2 * 10 + v2 * \alpha \quad (3)$$

Units of the time stamp $t$2 and the time stamp $t$3 are millisecond. $\alpha$ is a time length of one slot. A unit of $\alpha$ is millisecond. When the time stamp $t$2 and the time stamp t3 are in another unit, adaptive deformation may be performed on the formula (3).

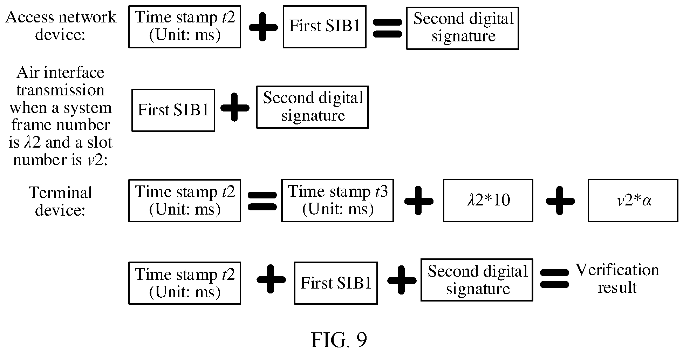

For example, as shown in FIG. 9, the access network device first generates the second digital signature based on the first SIB1 and the time stamp $t$2, and then sends the first SIB1 and the second digital signature to the terminal device when the system frame number is $\lambda$2 and the slot number is $v$2. After receiving the first SIB1 and the second digital signature, the terminal device obtains the time stamp $t$3, determines the time stamp t2 based on the time stamp $t$3, the system frame number $\lambda$2, and the slot number $v$2, and then verifies the second digital signature based on the first SIB1 and the time stamp $t$2. If verification on the second digital signature succeeds, the terminal device may also determine whether a difference between the time stamp $t$2 and a local time point is less than a threshold to determine whether an attack is a repeated attack. If the difference between the time stamp $t$2 and the local time point is less than the threshold, the terminal device determines that the first SIB1 is valid.

805: The terminal device determines, based on the first SIB1, the time stamp $t$2, and the second digital signature, that the first SIB1 is valid.

For a specific implementation of step 805, refer to the descriptions in the embodiment corresponding to FIG. 6.

Details are not described herein.

806: The access network device generates a first digital signature, where the first digital signature is a signature for the OSI and the time stamp $t1$. The time stamp $t1$ is an absolute time point corresponding to the access network device when the system frame number is $\lambda1$ and the slot number is $v1$.

For specific implementations of step 806 to step 810, refer to the descriptions in the embodiment corresponding to FIG. 4. Details are not described herein.

807: The access network device sends a first message to the terminal device when the system frame number is $\lambda1$ and the slot number is $v1$, where the first message includes the OSI and the first digital signature, and the first message does not include the time stamp $t1$.

808: The terminal device receives, based on the scheduling information of the OSI in the first SIB1 when the system frame number is $\lambda1$ and the slot number is $v1$, the first message sent by the access network device.

809: The terminal device determines the time stamp t1 based on the system frame number $\lambda1$, the slot number $v1$, the time stamp $t2$, the system frame number $\lambda2$, and the slot number $v2$.

810: The terminal device verifies the first digital signature based on the OSI and the time stamp $t1$.

According to the method described in FIG. 8, the time stamp t2 does not need to be sent during sending of the first SIB1, and the terminal device calculates the time stamp $t2$, to help reduce a quantity of information bits occupied by the time stamp while ensuring precision of the time stamp.

FIG. 10 is a schematic flowchart of a system message transmission method according to an embodiment of this application. FIG. 10 shows an example in which a terminal device and an access network device are used as execution bodies of the method. An execution body of the method is not limited in this application. For example, the terminal device or the access network device in FIG. 10 may alternatively be a chip, a chip system, or a processor that supports the terminal device or the access network device in implementing the method, or may be a logic module or software that can implement all or some functions of the terminal device or the access network device.

1001: The access network device sends a third message to the terminal device when a system frame number is 0 and a slot number is 0, where the third message includes a second SIB1, a time stamp $tx$, a difference $\Delta$, and a third digital signature. Correspondingly, the terminal device may receive the third message when the system frame number is 0 and the slot number is 0.

$$tx = \left\lfloor \frac{t3}{10M} \right\rfloor$$

The third digital signature is a signature for the second SIB1 and a time stamp $t3$. The time stamp . M is a maximum value of the system frame number. The time stamp $t3$ is equal to a sum of the time stamp $tx$ and the difference $\Delta$.

In other words, the access network device sends the time stamp $tx$ and the difference $\Delta$ instead of sending the time stamp $t3$.

1002: The terminal device determines the time stamp $t3$ based on the time stamp $tx$ and the difference $\Delta$.

In embodiments of this application, after receiving the third message when the system frame number is 0 and the slot number is 0, the terminal device determines the time stamp $t3$ based on the time stamp $tx$ and the difference $\Delta$.

1003: The terminal device determines, based on the second SIB1, the time stamp $t3$, and the third digital signature, that the second SIB1 is valid.

A principle in which the terminal device determines, based on the second SIB1, the time stamp $t3$, and the third digital signature, that the second SIB1 is valid is the same as a principle in which the terminal device determines, based on the first SIB1, the time stamp $t2$, and the second digital signature, that the first SIB1 is valid. Details are not described herein.

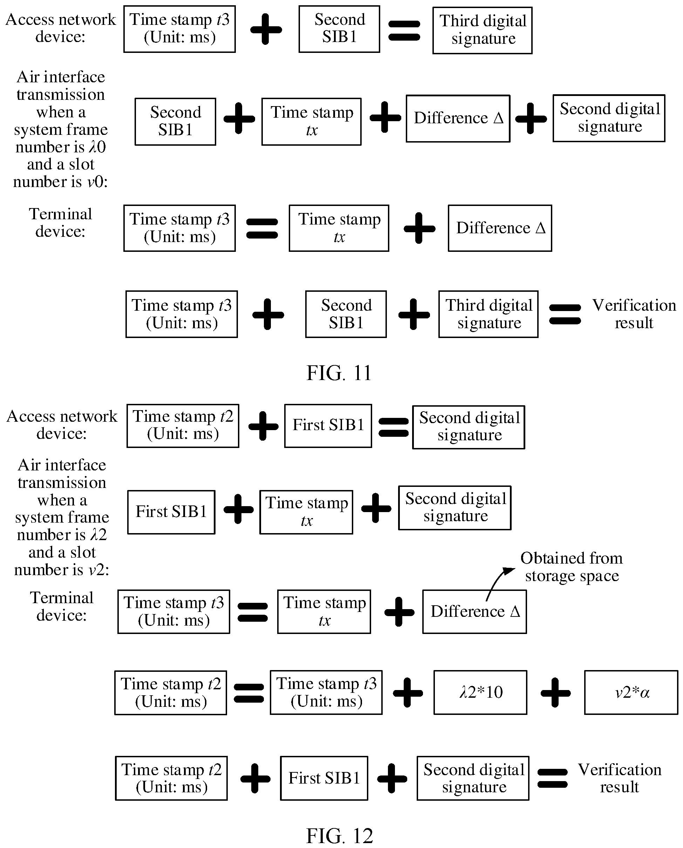

For example, as shown in FIG. 11, the access network device first signs the second SIB1 and the time stamp $t3$ to obtain the third digital signature. The access network device determines the time stamp $tx$ and the difference $\Delta$ based on the time stamp $t3$. When the system frame number is 0 and the slot number is 0, the access network device sends the second SIB1, the time stamp $tx$, the difference $\Delta$, and the third digital signature to the terminal device. When the system frame number is 0 and the slot number is 0, the terminal device receives the information, and after receiving the information, determines the time stamp $t3$ based on the time stamp $tx$ and the difference $\Delta$, to determine, based on the second SIB1, the time stamp $t3$, and the third digital signature, that the second SIB1 is valid.

1004: The terminal device stores the difference $\Delta$ into storage space.

In embodiments of this application, the terminal device stores the difference $\Delta$ into the storage space, to subsequently determine the time stamp $t3$ by using the difference $\Delta$.

1005: The access network device sends a second message to the terminal device when the system frame number is $\lambda2$ and the slot number is $v2$, where the second message includes the first SIB1, the time stamp $tx$, and the second digital signature. Correspondingly, when the system frame number is $\lambda2$ and the slot number is $v2$, the terminal device may receive the second message sent by the access network device.

The second digital signature is a signature for the first SIB1 and a time stamp $t2$. The time stamp $t2$ is an absolute time point corresponding to the access network device when the system frame number is $\lambda2$ and the slot number is $v2$. The second message does not include the time stamp $t2$, and the first SIB1 includes scheduling information of OSI.

In other words, in this embodiment, the access network device sends only the first SIB1, the time stamp $tx$, and the second digital signature together to the terminal device. The terminal device calculates the time stamp $t2$.

1006: The terminal device obtains the difference $\Delta$ from the storage space, and determines the time stamp $t3$ based on the time stamp $tx$ and the difference $\Delta$.

1007: The terminal device determines the time stamp $t2$ based on the time stamp $t3$, the system frame number $\lambda2$, and the slot number $v2$.

For a specific implementation of step 1007, refer to the description in the embodiment corresponding to FIG. 8. Details are not described herein.

1008: The terminal device determines, based on the first SIB1, the time stamp $t2$, and the second digital signature, that the first SIB1 is valid.

For a specific implementation of step 1008, refer to the description in the embodiment corresponding to FIG. 6. Details are not described herein.

For example, as shown in FIG. 12, the access network device first generates the second digital signature based on the first SIB1 and the time stamp $t2$, and then sends the first SIB1, the time stamp $tx$, and the second digital signature to the terminal device when the system frame number is $\lambda2$ and the slot number is $v2$. After receiving the first SIB1, the time stamp $tx$, and the second digital signature, the terminal device obtains the difference $\Delta$ from the storage space, and determines the time stamp $t3$ based on the time stamp $tx$ and the difference $\Delta$. The terminal device determines the time stamp $t2$ based on the time stamp $t3$, the system frame number $\lambda2$, and the slot number $v2$, and then verifies the second digital signature based on the first SIB1 and the time stamp $t2$. If verification on the second digital signature succeeds, the terminal device may also determine whether a difference between the time stamp $t2$ and a local time point is less than a threshold to determine whether an attack is a repeated attack. If the difference between the time stamp $t2$ and the local time point is less than the threshold, the terminal device determines that the first SIB1 is valid.

1009: The access network device generates a first digital signature, where the first digital signature is a signature for the OSI and a time stamp $t1$. The time stamp $t1$ is an absolute time point corresponding to the access network device when the system frame number is $\lambda1$ and the slot number is $v1$.

For specific implementations of step 1009 to step 1013, refer to the descriptions in the embodiment corresponding to FIG. 4. Details are not described herein.

1010: The access network device sends a first message to the terminal device when the system frame number is $\lambda1$ and the slot number is $v1$, where the first message includes the OSI and the first digital signature, and the first message does not include the time stamp $t1$.

1011: The terminal device receives, based on the scheduling information of the OSI in the first SIB1 when the system frame number is $\lambda1$ and the slot number is $v1$, the first message sent by the access network device.

1012: The terminal device determines the time stamp t1 based on the system frame number $\lambda1$, the slot number $v1$, the time stamp t2, the system frame number $\lambda2$, and the slot number $v2$.

1013: The terminal device verifies the first digital signature based on the OSI and the time stamp t1.

According to the method described in FIG. 10, when the first SIB1 is sent, the time stamp t3 is not directly sent, but the time stamp $tx$ and the difference $\Delta$ are sent, so that the terminal device determines the time stamp $t3$ based on the time stamp $tx$ and the difference $\Delta$. Information bits occupied by the time stamp $tx$ and the difference $\Delta$ are far fewer than information bits occupied by the time stamp $t3$. This facilitates reducing a quantity of information bits occupied by the time stamp. In addition, by storing the difference $\Delta$, the terminal device can determine the time stamp $t3$ when receiving the second message that carries the time stamp $tx$, and longest waiting time of the terminal device is a transmission periodicity T1 of the time stamp $tx$. If the terminal device does not store the difference $\Delta$ and the time stamp $tx$, longest waiting time of the terminal device is a maximum value between a transmission periodicity T1 of the time stamp $tx$ and a transmission periodicity T of the difference $\Delta$. Therefore, storing the difference $\Delta$ facilitates reducing network latency.

FIG. 13A and FIG. 13B are a schematic flowchart of a system message transmission method according to an embodiment of this application. FIG. 13A and FIG. 13B show an example in which a terminal device and an access network device are used as execution bodies of the method. An execution body of the method is not limited in this application. For example, the terminal device or the access network device in FIG. 13A and FIG. 13B may alternatively be a chip, a chip system, or a processor that supports the terminal device or the access network device in implementing the method, or may be a logic module or software that can implement all or some functions of the terminal device or the access network device.

1301: The access network device sends a third message to the terminal device when a system frame number is 0 and a slot number is 0, where the third message includes a second SIB1, a time stamp $tx$, a difference $\Delta$, and a third digital signature. Correspondingly, the terminal device may receive the third message when the system frame number is 0 and the slot number is 0.

The third digital signature is a signature for the second SIB1 and a time stamp $t3$. The time stamp $tx = \left\lfloor \frac{t3}{13M} \right\rfloor$.
M is a maximum value of the system frame number. The time stamp t3 is equal to a sum of the time stamp $tx$ and the difference $\Delta$.

In other words, the access network device sends the time stamp $tx$ and the difference $\Delta$ instead of sending the time stamp $t3$.

1302: The terminal device determines the time stamp $t3$ based on the time stamp $tx$ and the difference $\Delta$.

In embodiments of this application, after receiving the third message when the system frame number is 0 and the slot number is 0, the terminal device determines the time stamp $t3$ based on the time stamp $tx$ and the difference $\Delta$.

1303: The terminal device determines, based on the second SIB1, the time stamp $t3$, and the third digital signature, that the second SIB1 is valid.

A principle in which the terminal device determines, based on the second SIB1, the time stamp t3, and the third digital signature, that the second SIB1 is valid is the same as a principle in which the terminal device determines, based on the first SIB1, the time stamp $t2$, and the second digital signature, that the first SIB1 is valid. Details are not described herein.

1304: The terminal device stores the time stamp $tx$ and the difference $\Delta$ into storage space.

In embodiments of this application, the terminal device stores the difference $\Delta$ into the storage space, to subsequently determine the time stamp $t3$ by using the difference $\Delta$.

1305: The access network device sends a second message to the terminal device when the system frame number is $\lambda2$ and the slot number is $v2$, where the second message includes the first SIB1 and the second digital signature. Correspondingly, when the system frame number is $\lambda2$ and the slot number is $v2$, the terminal device may receive the second message sent by the access network device.

The second digital signature is a signature for the first SIB1 and a time stamp $t2$. The time stamp $t2$ is an absolute time point corresponding to the access network device when the system frame number is $\lambda2$ and the slot number is $v2$. The second message does not include the time stamp $t2$, and the first SIB1 includes scheduling information of OSI.

In other words, in this embodiment, the access network device sends only the first SIB1 and the second digital signature together to the terminal device. The terminal device calculates the time stamp $t2$.

1306: The terminal device obtains the time stamp $tx$ and the difference $\Delta$ from the storage space, and determines the time stamp $t3$ based on the time stamp $tx$ and the difference $\Delta$.

1307: The terminal device determines the time stamp $t2$ based on the time stamp $t3$, the system frame number $\lambda2$, and the slot number $v2$.

For a specific implementation of step 1307, refer to the descriptions in the embodiment corresponding to FIG. 8. Details are not described herein.

If a difference between the time stamp $t2$ and a local time point is less than a threshold, the terminal device determines that the first SIB1 is valid.

1308: The terminal device determines, based on the first SIB1, the time stamp t2, and the second digital signature, that the first SIB1 is valid.

For a specific implementation of step 1308, refer to the descriptions in the embodiment corresponding to FIG. 6. Details are not described herein.

For example, as shown in FIG. 14, the access network device first generates the second digital signature based on the first SIB1 and the time stamp $t2$, and then sends the first SIB1 and the second digital signature to the terminal device when the system frame number is $\lambda2$ and the slot number is $v2$. After receiving the first SIB1 and the second digital signature, the terminal device obtains the time stamp $tx$ and the difference $\Delta$ from the storage space, and determines the time stamp $t3$ based on the time stamp $tx$ and the difference $\Delta$. The terminal device determines the time stamp t2 based on the time stamp $t3$, the system frame number $\lambda2$, and the slot number $v2$, and then verifies the second digital signature based on the first SIB1 and the time stamp $t2$. If verification on the second digital signature succeeds, the terminal device may also determine whether the difference between the time stamp $t2$ and the local time point is less than the threshold to determine whether an attack is a repeated attack. If the difference between the time stamp $t2$ and the local time point is less than the threshold, the terminal device determines that the first SIB1 is valid.

1309: The access network device generates a first digital signature, where the first digital signature is a signature for the OSI and a time stamp $t1$. The time stamp $t1$ is an absolute time point corresponding to the access network device when the system frame number is $\lambda1$ and the slot number is $v1$.

For specific implementations of step 1309 to step 1313, refer to the descriptions in the embodiment corresponding to FIG. 4. Details are not described herein.

1310: The access network device sends a first message to the terminal device when the system frame number is $\lambda1$ and the slot number is $v1$, where the first message includes the OSI and the first digital signature, and the first message does not include the time stamp $t1$.

1311: The terminal device receives, based on the scheduling information of the OSI in the first SIB1 when the system frame number is $\lambda 1$ and the slot number is $v1$, the first message sent by the access network device.

1312: The terminal device determines the time stamp $t1$ based on the system frame number $\lambda 1$, the slot number $v1$, the time stamp $t2$, the system frame number $\lambda 2$, and the slot number $v2$.

1313: The terminal device verifies the first digital signature based on the OSI and the time stamp $t1$.

According to the method described in FIG. 13A and FIG. 13B, when the first SIB1 is sent, the time stamp $t3$ is not directly sent, but the time stamp $tx$ and the difference $\Delta$ are sent, so that the terminal device determines the time stamp $t3$ based on the time stamp $tx$ and the difference $\Delta$. Information bits occupied by the time stamp $tx$ and the difference $\Delta$ are far fewer than information bits occupied by the time stamp $t3$. This facilitates reducing a quantity of information bits occupied by the time stamp. In addition, the terminal device stores the time stamp $tx$ and the difference $\Delta$, so that waiting time of the terminal device is 0. If the terminal device does not store the difference $\Delta$ and the time stamp $tx$, longest waiting time of the terminal device is a maximum value between a transmission periodicity T1 of the time stamp $tx$ and a transmission periodicity T of the difference $\Delta$. Therefore, storing the time stamp $tx$ and the difference $\Delta$ facilitates reducing network latency.

In a possible implementation, in embodiments described in FIG. 10 and FIG. 13A and FIG. 13B, a delivery periodicity of the time stamp $tx$ and/or a delivery periodicity of the difference $\Delta$ are/is configured by the network device or pre-specified in a protocol. If the network device configures the delivery periodicity of the time stamp $tx$ and/or the delivery periodicity of the difference $\Delta$, the delivery periodicity of the time stamp $tx$ and/or the delivery periodicity of the difference $\Delta$ can be more flexible. If the delivery periodicity of the time stamp $tx$ and/or the delivery periodicity of the difference $\Delta$ are/is pre-specified in the protocol, network overheads can be reduced.

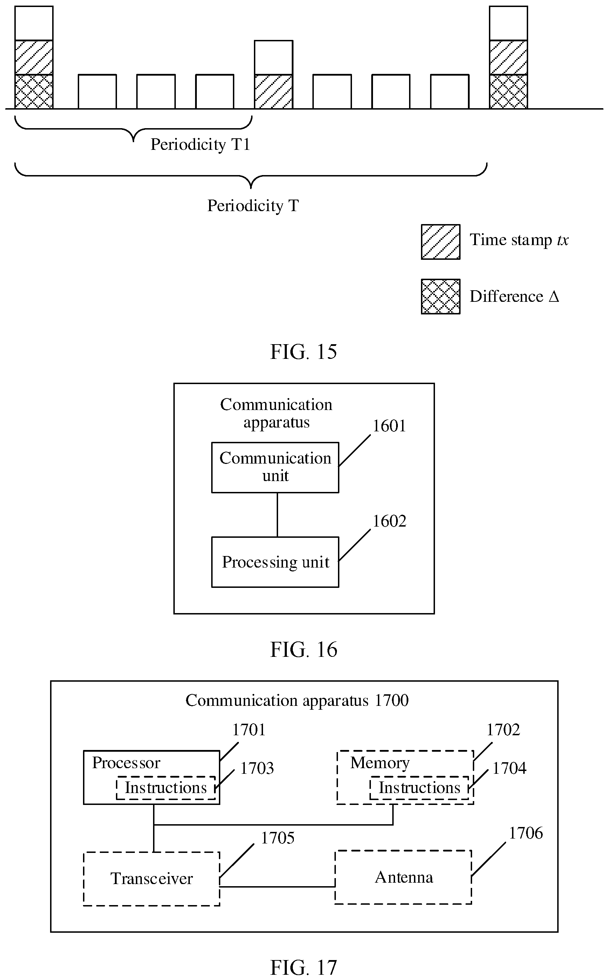

For example, as shown in FIG. 15, the transmission periodicity of the time stamp $tx$ is T1 and the transmission periodicity of the difference $\Delta$ is T. If the transmission periodicity T1 of the time stamp $tx$ and the transmission periodicity T of the difference $\Delta$ are configurable, the delivery periodicity of the time stamp $tx$ and/or the delivery periodicity of the difference $\Delta$ can be more flexible. This facilitates reducing network latency of the terminal device in a system. Optionally, the transmission periodicity T1 of the time stamp $tx$ and the transmission periodicity T of the difference $\Delta$ may be the same or different.

FIG. 10 and FIG. 13A and FIG. 13B describe two manners of obtaining the time stamp $t3$. In FIG. 10 and FIG. 13A and FIG. 13B, when the system frame number is 0 and the slot number is 0, the access network device sends the second SIB1, the time stamp $tx$, the difference $\Delta$, and the third digital signature. In other words, the time stamp $tx$ and the difference $\Delta$ are sent in replacement of the time stamp t3. In another implementation of this application, when the system frame number is 0 and the slot number is 0, the access network device may alternatively directly send the second SIB1, the time stamp $t3$, and the third digital signature. In other words, the time stamp $tx$ and the difference $\Delta$ do not need to be sent in replacement of the time stamp t3. Optionally, after receiving the time stamp $t3$, the terminal device may store the time stamp t3 into the storage space, to subsequently calculate the time stamp $t2$ by using the time stamp $t3$. Optionally, a delivery periodicity of the time stamp $t3$ is configured by the network device or pre-specified in the protocol.

FIG. 16 is a diagram of a structure of a communication apparatus according to an embodiment of this application. The communication apparatus shown in FIG. 16 may be configured to perform some or all functions of the terminal device in the foregoing method embodiments. The apparatus may be a terminal device, or may be an apparatus in a terminal device, or may be an apparatus that is compatible with a terminal device. The communication apparatus may alternatively be a chip system. The communication apparatus shown in FIG. 16 may include a communication unit 1601 and a processing unit 1602. The processing unit 1602 is configured to perform data processing. A receiving unit and a sending unit are integrated into the communication unit 1601. The communication unit 1601 may also be referred to as a transceiver unit. Alternatively, the communication unit 1601 may be split into the receiving unit and the sending unit.

The communication unit 1601 is configured to receive, based on scheduling information of OSI (other system information) in a first SIB1 (a system information block 1) when a system frame number is $\lambda 1$ and a slot number is $v1$, a first message sent by an access network device. The first message includes the OSI and a first digital signature. The first digital signature is a signature for the OSI and a time stamp $t1$. The time stamp $t1$ is an absolute time point corresponding to the access network device when the system frame number is $\lambda 1$ and the slot number is $v1$. The processing unit 1602 is configured to determine the time stamp t1 based on the system frame number $\lambda 1$, the slot number $v1$, a time stamp $t2$, a system frame number $\lambda 2$, and a slot number $v2$. The system frame number $\lambda 2$ and the slot number $v2$ are a system frame number and a slot number to which the first SIB1 belongs. The time stamp $t2$ is an absolute time point corresponding to the access network device when the system frame number is $\lambda 2$ and the slot number is $v2$. The processing unit 1602 is further configured to verify the first digital signature based on the OSI and the time stamp $t1$.

In a possible implementation, the communication unit 1601 is further configured to: before receiving, based on the scheduling information of the OSI in the first SIB1 when the system frame number is $\lambda 1$ and the slot number is $v1$, the first message sent by the access network device, receive, when the system frame number is $\lambda 2$ and the slot number is $v2$, a second message sent by the access network device. The second message includes the first SIB1, the time stamp $t2$, and a second digital signature. The second digital signature is a signature for the first SIB1 and the time stamp $t2$. The processing

unit 1602 is configured to determine, based on the first SIB1, the time stamp $t2$, and the second digital signature, that the first SIB1 is valid.

In a possible implementation, the communication unit 1601 is further configured to: before receiving, based on the scheduling information of the OSI in the first SIB1 when the system frame number is $\lambda1$ and the slot number is $v1$, the first message sent by the access network device, receive, when the system frame number is $\lambda2$ and the slot number is $v2$, a second message sent by the access network device. The second message includes the first SIB1 and a second digital signature. The second digital signature is a signature for the first SIB1 and the time stamp $t2$. The processing unit 1602 is further configured to obtain a time stamp $t3$. The time stamp $t3$ is an absolute time point corresponding to the access network device when the system frame number is 0 and the slot number is 0. The processing unit 1602 is further configured to determine the time stamp $t2$ based on the time stamp $t3$, the system frame number $\lambda2$, and the slot number $v2$. The processing unit 1602 is further configured to determine, based on the first SIB1, the time stamp $t2$, and the second digital signature, that the first SIB1 is valid.

In a possible implementation, the communication unit 1601 is further configured to: before receiving the second message sent by the access network device, receive, when the system frame number is 0 and the slot number is 0, a third message sent by the access network device. The third message includes a second SIB1, a time stamp $tx$, a difference $\Delta$, and a third digital signature. The third digital signature is a signature for the second SIB1 and the time stamp $t3$. The processing unit 1602 is further configured to determine the time stamp $t3$ based on the time stamp $tx$ and the difference $\Delta$.

The time stamp $$tx = \left\lfloor \frac{t3}{10M} \right\rfloor$$ . M is a maximum value of the system frame number. The time stamp $t3$ is equal to a sum of the time stamp $tx$ and the difference $\Delta$. The processing unit 1602 is further configured to determine, based on the second SIB1, the time stamp $t3$, and the third digital signature, that the second SIB1 is valid. The processing unit 1602 is further configured to store the difference $\Delta$ into storage space.

The second message further includes the time stamp $tx$, and that the processing unit 1602 obtains a time stamp $t3$ includes: The processing unit 1602 obtains the difference $\Delta$ from the storage space; and determines the time stamp t3 based on the time stamp $tx$ and the difference $\Delta$.

In a possible implementation, the communication unit 1601 is further configured to: before receiving, when the system frame number is $\lambda2$ and the slot number is $v2$, the second message sent by the access network device, receive, when the system frame number is 0 and the slot number is 0, a third message sent by the access network device. The third message includes a second SIB1, a time stamp $tx$, a difference $\Delta$, and a third digital signature. The third digital signature is a signature for the second SIB1 and the time stamp $t3$. The processing unit 1602 is further configured to determine the time stamp $t3$ based on the time stamp $tx$ and the difference $\Delta$. The time stamp $$tx = \left\lfloor \frac{t3}{10M} \right\rfloor$$ . M is a maximum value of the system frame number. The time stamp $t3$ is equal to a sum of the time stamp $tx$ and the difference $\Delta$. The processing unit 1602 is further configured to determine, based on the second SIB1, the time stamp t3, and the third digital signature, that the second SIB1 is valid. The processing unit 1602 is further configured to store the time stamp $tx$ and the difference $\Delta$ into storage space.

That the processing unit 1602 obtains a time stamp $t3$ includes: The processing unit 1602 obtains the time stamp $tx$ and the difference $\Delta$ from the storage space; and determines the time stamp $t3$ based on the time stamp $tx$ and the difference $\Delta$.

In a possible implementation, a delivery periodicity of the time stamp $tx$ and/or a delivery periodicity of the difference $\Delta$ are/is configured by a network device or pre-specified in a protocol.

In a possible implementation, the time stamp $t1$ satisfies the following formula:

$$t1 = t2 + (\lambda1 - \lambda2) * 10 + (v1 - v2) * \alpha$$

A unit of the time stamp $t1$ is millisecond, $\alpha$ is a time length of one slot, and a unit of $\alpha$ is millisecond.

In a possible implementation, the time stamp $t2$ satisfies the following formula:

$$t2 = t3 + \lambda2 * 10 + v2 * \alpha$$

A unit of the time stamp $t2$ is millisecond, $\alpha$ is a time length of one slot, and a unit of $\alpha$ is millisecond.

FIG. 16 is a diagram of a structure of a communication apparatus according to an embodiment of this application. The communication apparatus shown in FIG. 16 may be configured to perform some or all functions of the access network device in the foregoing method embodiments. The apparatus may be an access network device, or may be an apparatus in an access network device, or may be an apparatus that is compatible with an access network device. The communication apparatus may alternatively be a chip system. The communication apparatus shown in FIG. 16 may include a communication unit 1601 and a processing unit 1602. The processing unit 1602 is configured to perform data processing. A receiving unit and a sending unit are integrated into the communication unit 1601. The communication unit 1601 may also be referred to as a transceiver unit. Alternatively, the communication unit 1601 may be split into the receiving unit and the sending unit.

The processing unit 1602 is configured to generate a first digital signature. The first digital signature is a signature for OSI (other system information) and a time stamp $t1$. The time stamp t1 is an absolute time point corresponding to the access network device when a system frame number is $\lambda1$ and a slot number is $v1$. The communication unit 1601 is configured to send a first message to a terminal device when the system frame number is $\lambda1$ and the slot number is $v1$. The first message includes the OSI and the first digital signature. The first message does not include the time stamp $t1$.

In a possible implementation, the communication unit 1601 is further configured to: before the processing unit 1602 generates the first digital signature, send a second message to the terminal device when the system frame number is $\lambda2$ and the slot number is $v2$. The second message includes a first SIB1 (system information block 1), a time stamp $t2$, and a second digital signature. The second digital signature is a signature for the first SIB1 and the time stamp $t2$. The time stamp t2 is an absolute time point corresponding to the access network device when the system frame number is $\lambda2$ and the slot number is v2. The first SIB1 includes scheduling information of the OSI.

In a possible implementation, the communication unit 1601 is further configured to: before the processing unit 1602 generates the first digital signature, send a second message to the terminal device when the system frame number is $\lambda2$ and the slot number is $v2$. The second message includes a first SIB1 (system information block 1) and a second digital signature. The second digital signature is a signature for the first SIB1 and the time stamp $t2$. The time stamp $t2$ is an absolute time point corresponding to the access network device when the system frame number is $\lambda2$ and the slot number is $v2$. The second message does not include the time stamp t2. The first SIB1 includes scheduling information of the OSI.

In a possible implementation, the communication unit 1601 is further configured to send a third message to the terminal device when the system frame number is 0 and the slot number is 0. The third message includes a second SIB1, a time stamp $tx,$ a difference $\Delta$, and a third digital signature. The third digital signature is a signature for the second SIB1 and the time stamp $t3$. The time stamp $t3$ is an absolute time point corresponding to the access network device when the system frame number is 0 and the slot number is 0. The time stamp $$tx = \left\lfloor \frac{t3}{10M} \right\rfloor$$ . M is a maximum value of the system frame number. The time stamp $t3$ is equal to a sum of the time stamp $tx$ and the difference $\Delta$.

In a possible implementation, the second message further includes the time stamp $tx.$

In a possible implementation, a delivery periodicity of the time stamp $tx$ and/or a delivery periodicity of the difference $\Delta$ are/is configured by a network device or pre-specified in a protocol.

FIG. 17 is a diagram of a structure of a communication apparatus. The communication apparatus 1700 may be the terminal device in the foregoing method embodiments, or may be the access network device in the foregoing method embodiments, or may be a chip, a chip system, a processor, or the like that supports the terminal device in implementing the foregoing method, or may be a chip, a chip system, a processor, or the like that supports the access network device in implementing the foregoing method. The communication apparatus may be configured to implement the method described in the foregoing method embodiments. For details, refer to the descriptions in the foregoing method embodiments.

The communication apparatus 1700 may include one or more processors 1701. The processor 1701 may be a general-purpose processor, a dedicated processor, or the like, for example, may be a baseband processor or a central processing unit. The baseband processor may be configured to process a communication protocol and communication data. The central processing unit may be configured to: control the communication apparatus (such as a base station, a baseband chip, a terminal, a terminal chip, a DU, or a CU), execute a software program, and process data of the software program.

Optionally, the communication apparatus 1700 may include one or more memories 1702. The one or more memories 1702 may store instructions 1704. The instructions may be run on the processor 1701, to enable the communication apparatus 1700 to perform the method described in the foregoing method embodiments. Optionally, the memory 1702 may further store data. The processor 1701 and the memory 1702 may be separately disposed, or may be integrated together.

Optionally, the communication apparatus 1700 may further include a transceiver 1705 and an antenna 1706. The transceiver 1705 may be referred to as a transceiver unit, a transceiver, a transceiver circuit, or the like, and is configured to implement a transceiver function. The transceiver 1705 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function. The processing unit 1602 shown in FIG. 16 may be the processor 1701. The communication unit 1601 may be the transceiver 1705.

The communication apparatus 1700 is a terminal device, and the processor 1701 is configured to perform a data processing operation of the terminal device in the foregoing method embodiments. The transceiver 1705 is configured to perform data receiving and sending operations of the terminal device in the foregoing method embodiments.

The communication apparatus 1700 is an access network device, and the processor 1701 is configured to perform a data processing operation of the access network device in the foregoing method embodiments. The transceiver 1705 is configured to perform data receiving and sending operations of the access network device in the foregoing method embodiments.

In another possible design, the processor 1701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data, or the transceiver circuit, the interface, or the interface circuit may be configured to transmit or transfer a signal.

In still another possible design, optionally, the processor 1701 may store instructions 1703. The instructions 1703 are run on the processor 1701, to enable the communication apparatus 1700 to perform the method described in the foregoing method embodiments. The instructions 1703 may be fixed in the processor 1701. In this case, the processor 1701 may be implemented by hardware.

In yet another possible design, the communication apparatus 1700 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), a silicon germanium (SiGe), a gallium arsenide (GaAs), and the like.

The communication apparatus described in the foregoing embodiments may be a terminal device or an access network device. However, a scope of the communication apparatus described in embodiments of this application is not limited thereto, and a structure of the communication apparatus may not be limited by FIG. 17. The communication apparatus may be an independent device or may be a part of a relatively large device. For example, the communication apparatus may be:

(1) an independent integrated circuit IC, or a chip, or a chip system or a subsystem;
(2) a set having one or more ICs. Optionally, the IC set may also include a storage component configured to store data and instructions;
(3) ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, and the like; and
(6) others and so on.

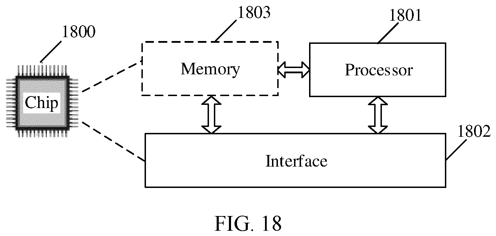

For a case in which the communication apparatus may be the chip or a chip system, refer to a diagram of a structure of a chip shown in FIG. 18. The chip 1800 shown in FIG. 18 includes a processor 1801 and an interface 1802, and optionally may further include a memory 1803. There may be one or more processors 1801, and there may be a plurality of interfaces 1802.

In a design, for a case in which the chip is configured to implement functions of the terminal device in embodiments of this application,

the interface 1802 is configured to receive or output a signal; and
the processor 1801 is configured to perform the data processing operation of the terminal device.

In another design, for a case in which the chip is configured to implement functions of the access network device in embodiments of this application,

the interface 1802 is configured to receive or output a signal; and
the processor 1801 is configured to perform the data processing operation of the access network device.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the communication apparatus provided in embodiments of this application may also correspondingly implement these features or functions. Details are not described herein.

It should be understood that the processor in embodiments of this application may be an integrated circuit chip and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program is or the instructions are executed by a communication apparatus, a function in any one of the foregoing method embodiments is implemented.

This application further provides a computer program product including instructions. When a computer reads and executes the computer program product, the computer is enabled to implement a function in any one of the foregoing method embodiments.

All or some of the foregoing embodiments may be implemented by using software, hardware, firmware, or any combination thereof. When software is used for implementation, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A system message transmission method, wherein the method comprises:

   receiving, by a terminal device based on scheduling information of other system information OSI in a system information block 1 SIB1 when a system frame number is $\lambda 1$ and a slot number is v1, a first message sent by an access network device, wherein the first message comprises the OSI and a first digital signature, the first digital signature is a signature for the OSI and a time stamp t1, and the time stamp t1 is an absolute time point corresponding to the access network device when the system frame number is $\lambda$1 and the slot number is v1; determining, by the terminal device, the time stamp t1 based on the system frame number $\lambda$1, the slot number v1, a time stamp t2, a system frame number $\lambda$2, and a slot number v2, wherein the system frame number $\lambda$2 and the slot number v2 are a system frame number and a slot number to which the first SIB1 belongs, and the time stamp t2 is an absolute time point corresponding to the access network device when the system frame number is $\lambda$2 and the slot number is v2; and

verifying, by the terminal device, the first digital signature based on the OSI and the time stamp t1.

2. The method according to claim 1, wherein before the receiving, by a terminal device based on scheduling information of OSI in a first SIB1 when a system frame number is $\lambda$1 and a slot number is v1, a first message sent by an access network device, the method further comprises:

receiving, by the terminal device when the system frame number is $\lambda$2 and the slot number is v2, a second message sent by the access network device, wherein the second message comprises the first SIB1, the time stamp t2, and a second digital signature, and the second digital signature is a signature for the first SIB1 and the time stamp t2; and

determining, by the terminal device based on the first SIB1, the time stamp t2, and the second digital signature, that the first SIB1 is valid.

3. The method according to claim 1, wherein before the receiving, by a terminal device based on scheduling information of OSI in a first SIB1 when a system frame number is $\lambda$1 and a slot number is v1, a first message sent by an access network device, the method further comprises:

receiving, by the terminal device when the system frame number is $\lambda$2 and the slot number is v2, a second message sent by the access network device, wherein the second message comprises the first SIB1 and a second digital signature, and the second digital signature is a signature for the first SIB1 and the time stamp $t$2;

obtaining, by the terminal device, a time stamp $t$3, wherein the time stamp $t$3 is an absolute time point corresponding to the access network device when the system frame number is 0 and the slot number is 0;

determining, by the terminal device, the time stamp $t$2 based on the time stamp $t$3, the system frame number $\lambda$2, and the slot number $v$2; and

determining, by the terminal device based on the first SIB1, the time stamp $t$2, and the second digital signature, that the first SIB1 is valid.

4. The method according to claim 3, wherein before the receiving, by the terminal device, a second message sent by the access network device, the method further comprises:

receiving, by the terminal device when the system frame number is 0 and the slot number is 0, a third message sent by the access network device, wherein the third message comprises a second SIB1, a time stamp $tx$, a difference $\Delta$, and a third digital signature, and the third digital signature is a signature for the second SIB1 and the time stamp $t$3;

determining, by the terminal device, the time stamp $t$3 based on the time stamp $tx$ and the difference $\Delta$, wherein the time stamp $tx = \left\lfloor \frac{t3}{10M} \right\rfloor$, M is a maximum value of the system frame number, and the time stamp $t$3 is equal to a sum of the time stamp $tx$ and the difference $\Delta$;

determining, by the terminal device based on the second SIB 1, the time stamp $t$3, and the third digital signature, that the second SIB1 is valid; and

storing, by the terminal device, the difference $\Delta$ into storage space, wherein

the second message further comprises the time stamp $tx$, and the obtaining, by the terminal device, a time stamp $t$3 comprises:

obtaining, by the terminal device, the difference $\Delta$ from the storage space; and

determining, by the terminal device, the time stamp $t$3 based on the time stamp $tx$ and the difference $\Delta$.

5. The method according to claim 3, wherein before the receiving, by the terminal device when the system frame number is $\lambda$2 and the slot number is $v$2, a second message sent by the access network device, the method further comprises:

receiving, by the terminal device when the system frame number is 0 and the slot number is 0, a third message sent by the access network device, wherein the third message comprises a second SIB1, a time stamp $tx$, a difference $\Delta$, and a third digital signature, and the third digital signature is a signature for the second SIB1 and the time stamp $t3$;

determining, by the terminal device, the time stamp $t3$ based on the time stamp $tx$ and the difference $\Delta$, wherein the time stamp $tx = \left\lfloor \frac{t3}{10M} \right\rfloor$, M is a maximum value of the system frame number, and the time stamp $t3$ is equal to a sum of the time stamp $tx$ and the difference $\Delta$;

determining, by the terminal device based on the second SIB1, the time stamp $t3$, and the third digital signature, that the second SIB 1 is valid; and

storing, by the terminal device, the time stamp $tx$ and the difference $\Delta$ into storage space, wherein the obtaining, by the terminal device, a time stamp $t3$ comprises:

> obtaining, by the terminal device, the time stamp $tx$ and the difference $\Delta$ from the storage space; and
> determining, by the terminal device, the time stamp t3 based on the time stamp $tx$ and the difference $\Delta$.

6. The method according to claim 4 or 5, wherein a delivery periodicity of the time stamp $tx$ and/or a delivery periodicity of the difference $\Delta$ are/is configured by a network device or pre-specified in a protocol.

7. The method according to any one of claims 1 to 6, wherein the time stamp $t1$ satisfies the following formula:

$$t1 = t2 + (\lambda1 - \lambda2) * 10 + (v1 - v2) * \alpha$$

wherein a unit of the time stamp $t1$ is millisecond, $\alpha$ is a time length of one slot, and a unit of $\alpha$ is millisecond.

8. The method according to any one of claims 3 to 6, wherein the time stamp $t2$ satisfies the following formula:

$$t2 = t3 + \lambda2 * 10 + v2 * \alpha$$

wherein a unit of the time stamp $t2$ is millisecond, $\alpha$ is a time length of one slot, and a unit of $\alpha$ is millisecond.

9. A system message transmission method, wherein the method comprises:

> generating, by an access network device, a first digital signature, wherein the first digital signature is a signature for other system information OSI and a time stamp $t1$, and the time stamp $t1$ is an absolute time point corresponding to the access network device when a system frame number is $\lambda1$ and a slot number is $v1$; and
> sending, by the access network device, a first message to a terminal device when the system frame number is $\lambda1$ and the slot number is $v1$, wherein the first message comprises the OSI and the first digital signature, and the first message does not comprise the time stamp $t1$.

10. The method according to claim 9, wherein before the generating, by an access network device, a first digital signature, the method further comprises:
sending, by the access network device, a second message to the terminal device when the system frame number is $\lambda2$ and the slot number is $v2$, wherein the second message comprises a system information block 1 SIB1, a time stamp $t2$, and a second digital signature, the second digital signature is a signature for the first SIB1 and the time stamp $t2$, the time stamp $t2$ is an absolute time point corresponding to the access network device when the system frame number is $\lambda2$ and the slot number is $v2$, and the first SIB1 comprises scheduling information of the OSI.

11. The method according to claim 9, wherein before the generating, by an access network device, a first digital signature, the method further comprises:
sending, by the access network device, a second message to the terminal device when the system frame number is $\lambda2$ and the slot number is $v2$, wherein the second message comprises a system information block 1 SIB1 and a second digital signature, the second digital signature is a signature for the first SIB1 and a time stamp $t2$, the time stamp $t2$ is an absolute time point corresponding to the access network device when the system frame number is $\lambda2$ and the slot number is $v2$, the second message does not comprise the time stamp $t2$, and the first SIB1 comprises scheduling information of the OSI.

12. The method according to claim 11, wherein the method further comprises:
sending, by the access network device, a third message to the terminal device when the system frame number is 0 and the slot number is 0, wherein the third message comprises a second SIB1, a time stamp $tx$, a difference $\Delta$, and a third digital signature, the third digital signature is a signature for the second SIB1 and a time stamp $t3$, the time stamp $t3$ is an absolute time point corresponding to the access network device when the system frame number is 0 and the slot number is 0, the time stamp

$$tx = \left\lfloor \frac{t3}{10M} \right\rfloor$$

, M is a maximum value of the system frame number, and the time stamp $t3$ is equal to a sum of the time stamp $tx$ and the difference $\Delta$.

13. The method according to claim 12, wherein the second message further comprises the time stamp $tx$.

14. The method according to claim 12 or 13, wherein a delivery periodicity of the time stamp $tx$ and/or a delivery periodicity of the difference $\Delta$ are/is configured by a network device or pre-specified in a protocol.

15. A communication apparatus, comprising a unit configured to perform the method according to any one of claims 1 to 8, or comprising a unit configured to perform the method according to any one of claims 9 to 14.

16. A communication apparatus, comprising a processor and a memory, wherein the processor is coupled to the memory, the processor is configured to perform the method according to any one of claims 1 to 8, or the processor is configured to perform the method according to any one of claims 9 to 14.

17. A chip, comprising a processor and an interface, wherein the processor is coupled to the interface, the interface is configured to receive or output a signal, the processor is configured to execute code instructions, to enable the method according to any one of claims 1 to 8 to be performed, or to enable the method according to any one of claims 9 to 14 to be performed.

18. A computer-readable storage medium, wherein the computer-readable storage medium stores computer-executable instructions; and when the computer-executable instructions are invoked by a computer, the computer is enabled to perform the method according to any one of claims 1 to 8, or the computer is enabled to perform the method according to any one of claims 9 to 14.

19. A computer program product, wherein the computer program product comprises computer program code, and when the computer program code is run by a computer, the computer is enabled to perform the method according to any one of claims 1 to 8, or the computer is enabled to perform the method according to any one of claims 9 to 14.

Broadcast messages are
vulnerable to attacks

| Base station | Attacker | Authorized user |
|---|---|---|

① Send a MIB

② Send a SIB1 to a SIBN

Before security authentication

Send a Msg1

Send a Msg2

③

Send a Msg3

Send a Msg4

④

Send a security mode command

Configure security mode parameters to complete
NAS SMC, AS SMC, and 5G AKA authentication

Send a security mode complete

FIG. 1

| Time stamp | Broadcast message | Signature |
|---|---|---|

32 bits (at a second level)

43 bits (at a millisecond level)

52 bits (at a microsecond level)

Calculation starting from 1970-1-1 0:0:0 GMT

FIG. 2

30

31

FIG. 3

Access network
device

Terminal
device

401: Generate a first
digital signature, where
the first digital signature
is a signature for OSI and
a time stamp $t1$

402: Send a first message to the
terminal device when a system
frame number is $\lambda1$ and a slot
number is $v1$, where the first
message includes the OSI and
the first digital signature, and
the first message does not
include the time stamp $t1$

403: The terminal device receives,
based on scheduling information of
the OSI in a first SIB1 when the
system frame number is $\lambda1$ and the slot
number is $v1$, the first message sent by
the access network device

404: The terminal device determines
the time stamp $t1$ based on the system
frame number $\lambda1$, the slot number $v1$,
a time stamp $t2$, a system frame
number $\lambda2$, and a slot number $v2$

405: The terminal device verifies the
first digital signature based on the OSI
and the time stamp $t1$

FIG. 4

Access network
device:

Time stamp $t1$
(Unit: ms) ➕ SIB2/4 ➖ First digital
signature

Air interface
transmission
when a system
frame number is
$\lambda 1$ and a slot
number is $v1$:

SIB2/4 ➕ First digital
signature

Terminal
device:

Time stamp $t1$
(Unit: ms) ➖ Time stamp $t2$
(Unit: ms) ➕ $(\lambda 1 - \lambda 2)*10$ ➕ $(v1 - v2)*\alpha$

SIB2/4 ➕ Time stamp $t1$
(Unit: ms) ➕ First digital
signature ➖ Verification
result

FIG. 5

```
┌──────────────────┐                          ┌──────────────────┐
│  Access network  │                          │  Terminal device │
│     device       │                          │                  │
└──────────────────┘                          └──────────────────┘
         │                                              │
┌─────────────────────────────┐                        │
│ 601: Generate a second digital                        │
│ signature, where the second │                         │
│ digital signature is a signature for                  │
│ a first SIB1 and a time stamp t2 │                    │
└─────────────────────────────┘                         │
         │                                              │
         │ ┌──────────────────────────────────────┐     │
         │ │ 602: Send a second message to the terminal │
         │ │ device when a system frame number is λ2    │
         │ │ and a slot number is v2, where the second  │
         │ │ message includes the first SIB1, the time  │
         │ │ stamp t2, and the second digital signature,│
         │ │ and the first SIB1 includes scheduling     │
         │ │ information of OSI                          │
         │ └──────────────────────────────────────┘     │
         │ ─────────────────────────────────────────────▶│
         │                            ┌──────────────────────────┐
         │                            │ 603: Determine, based on │
         │                            │ the first SIB1, the time │
         │                            │ stamp t2, and the second │
         │                            │ digital signature, that the │
┌─────────────────────────────┐      │ first SIB1 is valid       │
│ 604: Generate a first digital │     └──────────────────────────┘
│ signature, where the first digital │  │
│ signature is a signature for the OSI │ │
│ and a time stamp t1          │        │
└─────────────────────────────┘         │
         │ ┌──────────────────────────────────────┐     │
         │ │ 605: Send a first message to the terminal │
         │ │ device when the system frame number is λ1 │
         │ │ and the slot number is v1, where the first │
         │ │ message includes the OSI and the first     │
         │ │ digital signature, and the first message does │
         │ │ not include the time stamp t1             │
         │ └──────────────────────────────────────┘     │
         │ ─────────────────────────────────────────────▶│
         │                    ┌──────────────────────────────┐
         │                    │ 606: Receive, based on the scheduling │
         │                    │ information of the OSI in the first SIB1 │
         │                    │ when the system frame number is λ1 and │
         │                    │ the slot number is v1, the first message │
         │                    │ sent by the access network device │
         │                    └──────────────────────────────┘
         │                    ┌──────────────────────────────┐
         │                    │ 607: Determine the time stamp t1 based │
         │                    │ on the system frame number λ1, the slot │
         │                    │ number v1, the time stamp t2, the system │
         │                    │ frame number λ2, and the slot number v2 │
         │                    └──────────────────────────────┘
         │                    ┌──────────────────────────────┐
         │                    │ 608: Verify the first digital signature │
         │                    │ based on the OSI and the time stamp t1 │
         │                    └──────────────────────────────┘
         │                                              │
```

FIG. 6

Access network device: | Time stamp *t2* (Unit: ms) | **+** | First SIB1 | **=** | Second digital signature

Air interface transmission when a system frame number is $\lambda2$ and a slot number is *v2*: | Time stamp *t2* (Unit: ms) | **+** | First SIB1 | **+** | Second digital signature

Terminal device: | Time stamp *t2* (Unit: ms) | **+** | First SIB1 | **+** | Second digital signature | **=** | Verification result

FIG. 7

| Access network<br>device | | Terminal device |
|---|---|---|

801: Generate a second digital signature,
where the second digital signature is a
signature for a first SIB1 and a time stamp $t2$

802: Send a second message to the terminal
device when a system frame number is $\lambda2$
and a slot number is $v2$, where the second
message includes the first SIB1 and the
second digital signature, the second
message does not include the time stamp
$t2$, and the first SIB1 includes scheduling
information of OSI

803: Obtain a time stamp $t3$

804: Determine the time stamp $t2$ based on
the time stamp $t3$, the system frame
number $\lambda2$, and the slot number $v2$

805: Determine, based on the first SIB1,
the time stamp $t2$, and the second digital
signature, that the first SIB1 is valid

806: Generate a first digital signature, where
the first digital signature is a signature for
the OSI and a time stamp $t1$

807: Send a first message to the terminal
device when the system frame number is $\lambda1$
and the slot number is $v1$, where the first
message includes the OSI and the first
digital signature, and the first message does
not include the time stamp $t1$

808: Receive, based on the scheduling
information of the OSI in the first SIB1
when the system frame number is $\lambda1$ and
the slot number is $v1$, the first message sent
by the access network device

809: Determine the time stamp $t1$ based on
the system frame number $\lambda1$, the slot
number $v1$, the time stamp $t2$, the system
frame number $\lambda2$, and the slot number $v2$

810: Verify the first digital signature based
on the OSI and the time stamp $t1$

FIG. 8

Access network device: | Time stamp *t2* (Unit: ms) | ➕ | First SIB1 | ➖ | Second digital signature

Air interface transmission when a system frame number is $\lambda2$ and a slot number is *v2*: | First SIB1 | ➕ | Second digital signature

Terminal device: | Time stamp *t2* (Unit: ms) | ➖ | Time stamp *t3* (Unit: ms) | ➕ | $\lambda2*10$ | ➕ | $v2*\alpha$

Time stamp *t2* (Unit: ms) | ➕ | First SIB1 | ➕ | Second digital signature | ➖ | Verification result

FIG. 9

| Access network device | Terminal device |
|---|---|

1001: Send a third message to the terminal device when a system frame number is 0 and a slot number is 0, where the third message includes a second SIB1, a time stamp $tx$, a difference $\Delta$, and a third digital signature

1002: Determine a time stamp $t3$ based on the time stamp $tx$ and the difference $\Delta$

1003: Determine, based on the second SIB1, the time stamp $t3$, and the third digital signature, that the second SIB1 is valid

1004: Store the difference $\Delta$ into storage space

1005: Send a second message to the terminal device when the system frame number is $\lambda2$ and the slot number is $v2$, where the second message includes a first SIB1, a time stamp $tx$, and a second digital signature, the second message does not include a time stamp $t2$, and the first SIB1 includes scheduling information of OSI

1006: Obtain the difference $\Delta$ from the storage space, and determine the time stamp $t3$ based on the time stamp $tx$ and the difference $\Delta$

1007: Determine the time stamp $t2$ based on the time stamp $t3$, the system frame number $\lambda2$, and the slot number $v2$

1008: Determine, based on the first SIB1, the time stamp $t2$, and the second digital signature, that the first SIB1 is valid

1009: Generate a first digital signature, where the first digital signature is a signature for the OSI and a time stamp $t1$

1010: Send a first message to the terminal device when the system frame number is $\lambda1$ and the slot number is $v1$, where the first message includes the OSI and the first digital signature, and the first message does not include the time stamp $t1$

1011: Receive, based on the scheduling information of the OSI in the first SIB1 when the system frame number is $\lambda1$ and the slot number is $v1$, the first message sent by the access network device

1012: Determine the time stamp $t1$ based on the system frame number $\lambda1$, the slot number $v1$, the time stamp $t2$, the system frame number $\lambda2$, and the slot number $v2$

1013: Verify the first digital signature based on the OSI and the time stamp $t1$

FIG. 10

FIG. 11

FIG. 12

| Access network device | | Terminal device |
|---|---|---|

1301: Send a third message to the terminal device when a system frame number is 0 and a slot number is 0, where the third message includes a second SIB1, a time stamp *tx*, a difference Δ, and a third digital signature

1302: Determine a time stamp *t3* based on the time stamp *tx* and the difference Δ

1303: Determine, based on the second SIB1, the time stamp *t3*, and the third digital signature, that the second SIB1 is valid

1304: Store the time stamp *tx* and the difference Δ into storage space

1305: Send a second message to the terminal device when the system frame number is λ2 and the slot number is *v2*, where the second message includes a first SIB1 and a second digital signature, the second message does not include a time stamp *t2*, and the first SIB1 includes scheduling information of OSI

1306: Obtain the time stamp *tx* and the difference Δ from the storage space, and determine the time stamp *t3* based on the time stamp *tx* and the difference Δ

1307: Determine the time stamp *t2* based on the time stamp *t3*, the system frame number λ2, and the slot number *v2*

1308: Determine, based on the first SIB1, the time stamp *t2*, and the second digital signature, that the first SIB1 is valid

TO FIG. 13B

FIG. 13A

CONT. FROM FIG. 13A

1309: Generate a first digital signature, where the first digital signature is a signature for the OSI and a time stamp $t1$

1310: Send a first message to the terminal device when the system frame number is $\lambda1$ and the slot number is $v1$, where the first message includes the OSI and the first digital signature, and the first message does not include the time stamp $t1$

1311: Receive, based on the scheduling information of the OSI in the first SIB 1 when the system frame number is $\lambda1$ and the slot number is $v1$, the first message sent by the access network device

1312: Determine the time stamp $t1$ based on the system frame number $\lambda1$, the slot number $v1$, the time stamp $t2$, the system frame number $\lambda2$, and the slot number $v2$

1313: Verify the first digital signature based on the OSI and the time stamp $t1$

FIG. 13B

Access network device:

Time stamp $t2$ (Unit: ms) **+** First SIB1 **=** Second digital signature

Air interface transmission when a system frame number is $\lambda2$ and a slot number is $v2$:

First SIB1 **+** Second digital signature

Obtained from storage space

Terminal device:

Time stamp $t3$ (Unit: ms) **=** Time stamp $tx$ **+** Difference $\Delta$

Time stamp $t2$ (Unit: ms) **=** Time stamp $t3$ (Unit: ms) **+** $\lambda2*10$ **+** $v2*\alpha$

Time stamp $t2$ (Unit: ms) **+** First SIB1 **+** Second digital signature **=** Verification result

FIG. 14

Periodicity T1

Periodicity T

Time stamp *tx*

Difference Δ

FIG. 15

Communication apparatus

Communication unit 1601

Processing unit 1602

FIG. 16

Communication apparatus 1700

Processor 1701

Instructions 1703

Memory 1702

Instructions 1704

Transceiver 1705

Antenna 1706

FIG. 17

1800

1803

1801

Chip

Memory

Processor

1802

Interface

FIG. 18

## INTERNATIONAL SEARCH REPORT

| International application No. |
| --- |
| **PCT/CN2023/082821** |

**A. CLASSIFICATION OF SUBJECT MATTER**

H04W12/06(2021.01)i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, ENTXT, WPABS, DWPI: 签名, 时间戳, 系统信息, 系统信息块, 帧, osi, SI, sib, stamp, time, without, need +, sign+

**C. DOCUMENTS CONSIDERED TO BE RELEVANT**

| Category* | Citation of document, with indication, where appropriate, of the relevant passages | Relevant to claim No. |
| --- | --- | --- |
| A | US 2017295489 A1 (SAMSUNG ELECTRONICS CO., LTD.) 12 October 2017 (2017-10-12) entire document | 1-19 |
| A | HUAWEI et al. "R2-2201733 Summary of [AT116bis-e][102][NTN]_v21_Rapporteur Summary" *3GPP tsg_ran\wg2_rl2*, 31 January 2022 (2022-01-31), section 3.1.1 | 1-19 |
| A | CN 101674315 A (ZTE CORP.) 17 March 2010 (2010-03-17) entire document | 1-19 |
| A | CN 112751637 A (HUAWEI TECHNOLOGIES CO., LTD.) 04 May 2021 (2021-05-04) entire document | 1-19 |
| A | CN 113242128 A (BEIJING TIANYU YUN'AN TECHNOLOGY CO., LTD.) 10 August 2021 (2021-08-10) entire document | 1-19 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 June 2023** | **19 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082821**

| Patent document cited in search report | | | Publication date (day/month/year) | Patent family member(s) | | | Publication date (day/month/year) |
|---|---|---|---|---|---|---|---|
| US | 2017295489 | A1 | 12 October 2017 | KR | 20180114244 | A | 17 October 2018 |
| | | | | KR | 102088857 | B1 | 13 March 2020 |
| | | | | WO | 2017176068 | A1 | 12 October 2017 |
| | | | | US | 10306470 | B2 | 28 May 2019 |
| CN | 101674315 | A | 17 March 2010 | US | 2012213234 | A1 | 23 August 2012 |
| | | | | US | 8718098 | B2 | 06 May 2014 |
| | | | | EP | 2479952 | A1 | 25 July 2012 |
| | | | | EP | 2479952 | A4 | 27 November 2013 |
| | | | | EP | 2479952 | B1 | 26 November 2014 |
| | | | | WO | 2010145327 | A1 | 23 December 2010 |
| CN | 112751637 | A | 04 May 2021 | None | | | |
| CN | 113242128 | A | 10 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210290757